# EUROPÄISCHE PATENTSCHRIFT

(11) **EP 4 385 321 B1**
(45) Veröffentlichungstag und Bekanntmachung des Hinweises auf die Patenterteilung: **01.10.2025**
(21) Anmeldenummer: 23215968.1
(22) Anmeldetag: 12.12.2023
(51) Int. Cl.: A01K 5/00

(54) **MESSERSCHNELLWECHSELVORRICHTUNG**
KNIFE QUICK CHANGE DEVICE
DISPOSITIF DE CHANGEMENT RAPIDE DE COUTEAU

(30) Priorität: 14.12.2022 DE 102022133200
(43) Veröffentlichungstag der Anmeldung: 19.06.2024
(73) Patentinhaber: Mayer Verwaltungs GmbH & Co. KG, 84529 Tittmoning (DE)
(72) Erfinder: Huber, Konrad, 84529 Tittmoning (DE)
(74) Vertreter: Flach Bauer & Partner Patentanwälte mbB

(56) Entgegenhaltungen:
- EP-A1- 2 554 047
- EP-A2- 2 674 028

## Beschreibung

Die vorliegende Erfindung betrifft eine Messerschnellwechselvorrichtung für einen Futtermischwagen, eine Mischschnecke für einen Futtermischwagen und einen Futtermischwagen. Weiterhin betrifft die vorliegende Erfindung ein Verfahren zum Wechseln eines Messers einer Mischschnecke für einen Futtermischwagen.

### Hintergrund

Futtermischwagen dienen in bekannter Weise dazu, Futtermittel in der Form von Grassilage, Maissilage, Heu, Kraftfutter und dergleichen zu mischen, zum Fütterungsort zu transportieren und dort auszugeben. Zu diesem Zweck weisen Futtermischwagen einen Futtermischwagenbehälter mit einem Boden und einer Umfangswand auf, die sich vom Boden aus in überwiegend vertikaler oder schräg verlaufender Richtung nach oben erstreckt. Das Mischen erfolgt mittels einer oder mehrerer Misch-schnecken, die innerhalb des Futtermischwagenbehälters mit meist vertikaler Drehachse angeordnet sind. Die Mischschnecken haben dabei üblicherweise eine konische Außenkontur, d. h. der Schneckendurchmesser ist im bodennahen Bereich größer als im oberen Endbereich.

Typischerweise sind an der Mischschnecke, insbesondere an deren Wendel, Messer angeordnet, die dazu dienen das Futtermittel zu zerkleinern und/oder zu mischen. Diese Messer werden standardmäßig mit einer Schraubverbindung (meist Senkkopfschrauben) an einem Schneckenflügel der Mischschnecke befestigt. Durch Gebrauch verschleißen die Messer, sodass diese in regelmäßigen Abständen (i.d.R. nach ca. 1 bis 5 Jahren) ausgewechselt werden müssen. Der Wechselvorgang für das/die Messer ist sehr aufwändig, da die Schraubverbindungen nach dieser Zeitspanne sehr schwer zu lösen sind und zum Teil abgeschnitten bzw. ausgebohrt werden müssen. Anschließend werden neue bzw. überarbeitete Messer wieder angeschraubt.

Zudem weisen die Messer oder der korrespondierende Schneckenflügel oftmals zusätzliche Bohrungen auf, die eine Winkelverstellung der Messer ermöglichen. Auch für die Winkelverstellung müssen die Schrauben bei herkömmlichen Mischschnecken unter hohem Aufwand gelöst und erneut verschraubt werden.

Neben dem erheblichen Arbeitsaufwand besteht beim Messerwechsel und der Winkelverstellung außerdem eine sehr hohe Verletzungsgefahr, da die Platzverhältnisse im Futtermischwagenbehälter sehr beengt sind. Der/die Mechaniker*in muss daher sehr nahe an die auszutauschenden bzw. ausgetauschten Messer herantreten, wodurch die Verletzungsgefahr steigt.

Beispielsweise ist aus EP 2 674 028 A2 eine Schneidmesserhalterung zum Befestigen eines Schneidmessers 4 an einer Schneckengewindewand einer Mischschnecke eines Futtermischwagens bekannt. Weiterhin offenbart EP 2 554 047 A1 eine Klinge die zum Beispiel in Maschinen zum Zerkleinern von Getreide und/oder faserigem Material verwendet werden kann. Die Aufgabe der vorliegenden Erfindung ist es daher, den Messertausch und/oder die Winkelverstellung der Messer zu vereinfachen und sicherer zu gestalten. Zudem soll die Zeit, die für das Wechseln/Verstellen der Messer erforderlich ist reduziert werden.

### Beschreibung der Erfindung

Die obige Aufgabe wird, jedenfalls teilweise, durch eine Messerschnellwechselvorrichtung für einen Futtermischwagen, eine Mischschnecke für einen Futtermischwagen und einen Futtermischwagen gemäß den unabhängigen Produktansprüchen gelöst. Zudem wird die obige Aufgabe, jedenfalls teilweise, durch ein Verfahren gemäß dem unabhängigen Verfahrensanspruch gelöst.

Insbesondere wird die Aufgabe durch eine Messerschnellwechselvorrichtung für eine Mischschnecke eines Futtermischwagens gelöst. Die Messerschnellwechselvorrichtung umfasst ein Messer und eine Montageplatte, wobei das Messer lösbar an der Montageplatte fixiert werden kann. Die Montageplatte kann ein separates Bauteil sein, oder integral mit der Mischschnecke ausgebildet sein. Die Montageplatte weist zumindest ein Messeraufnahmeelement und zumindest ein Verriegelungselement auf. Das Verriegelungselement kann beabstandet oder in unmittelbarer Nähe zu dem Messeraufnahmeelement angeordnet sein. Ebenso kann das zumindest eine Verriegelungselement an dem Messeraufnahmeelement angeordnet sein und/oder integral mit diesem ausgebildet sein.

Das Messer weist zumindest ein komplementäres Aufnahmeelement und zumindest ein komplementäres Verriegelungselement auf. Das Messer und die Montageplatte sind zum lösbaren Fixieren des Messers an der Montageplatte derart eingerichtet, dass das Messer mit dem komplementären Aufnahmeelement in einer Montagerichtung A auf das Messeraufnahmeelement aufgeschoben werden kann, sodass dass komplementären Aufnahmeelement an dem Messeraufnahmeelement anschlägt. Zudem sind das Messer und die Montageplatte so eingerichtet, dass das Verriegelungselement mit dem komplementären Verriegelungselement verriegeln kann, sodass eine Bewegung des Messers entgegen der Montagerichtung A blockiert wird, wenn das komplementären Aufnahmeelement an das Messeraufnahmeelement anschlägt.

Die Montagerichtung A kann im Wesentlichen in radialer Richtung der Mischschnecke orientiert sein. Ebenso kann die Montagerichtung im Wesentlichen eine Umfangsrichtung der Mischschnecke sein. In diesem Fall wird das Messer in Montagerichtung A verschwenkt (vorzugsweise entgegen der Drehrichtung der Mischschnecke) um lösbar fixiert zu werden, oder translatorisch verschoben. Insbesondere bevorzugt wird das Messer entgegen der Drehrichtung der Mischschnecke verschoben, um montiert zu werden.

Die Montageplatte ist dazu eingerichtet an einer Mischschnecke für einen Futtermischwagen angebracht zu werden. In einer alternativen Ausführungsform der Erfindung ist die Montageplatte integral mit einer Mischschnecke, insbesondere einem Schneckenflügel der Mischschnecke, eines Futtermischwagens ausgebildet.

Insbesondere kann ein Schneckenflügel einer Mischschnecke einen oder mehrere (im Wesentlichen) ebene Bereiche aufweisen. Ein ebener Bereich ist ein Bereich der keine Steigung aufweist. Ein im Wesentlichen ebener Bereich ist ein Bereich mit einer Steigung kleiner 600 mm, insbesondere kleiner 400 mm oder kleiner 200 mm. Die Steigung (auch als Ganghöhe bezeichnet) der Mischschnecke bezeichnet diejenige Strecke, um die sich die Mischschnecke bei einer vollen Umdrehung in Richtung der Drehachse windet.

In diesem (im Wesentlichen) ebenen Bereich bzw. diesen (im Wesentlichen) ebenen Bereichen kann/können die Montageplatte(n) angebracht werden, oder eine entsprechende Montageplatte kann mit einem dieser Bereiche integral ausgebildet sein.

In einer Ausführungsform kann die Mischschnecke zumindest einen gekanteten Schneckenflügel (Wendel) aufweisen. Dieser gekantete Schneckenflügel hat Bereiche unterschiedlicher Steigung. (Im Wesentlichen) ebene Bereiche wechseln sich mit Bereichen höherer Steigung ab. Diese Bereiche höherer Steigung weisen typischerweise eine Steigung größer als 200 mm, insbesondere größer als 400 mm, oder größer als 600 mm auf.

Zwischen einem (im Wesentlichen) ebenen Bereich und einem Bereich höherer Steigung können steile Bereiche eingefügt sein. Diese steilen Bereiche gleichen die verringerte Steigung der (im Wesentlichen) ebenen Bereiche aus, sodass die durchschnittliche Steigung der Mischschnecke beispielsweise in einem Bereich von 200 bis 600 mm, insbesondere in einem Bereich von 400 bis 600 mm liegt. Ist die Montageplatte integral mit der Mischschnecke ausgebildet, können das zumindest ein Messeraufnahmeelement und das zumindest ein Verriegelungselement auf der Unterseite eines Schneckenflügels angeordnet sein, insbesondere in einem im Wesentlichen ebenen Bereich, oder in einem ebenen Bereich des Schneckenflügels.

Durch das lösbare Fixieren eines Messers an der Montageplatte kann so eine Mischschnecke einfach mit Messern bestückt werden, oder die Messer können in einfacher Art und Weise ausgetauscht werden. Insbesondere kann die Montageplatte mit einer ersten Seite an einer Wendel einer Mischschnecke anliegen, wenn die Montageplatte an der Mischschnecke angebracht ist. Auf der gegenüberliegenden Seite der Montageplatte können das Messeraufnahmeelement sowie das Verriegelungselement angeordnet sein.

Insbesondere kann das Messeraufnahmeelement und/oder das Verriegelungselement von einer Seite der Montageplatte vorstehen. Ist die Montageplatte integral mit der Mischschnecke ausgebildet, können das Messeraufnahmeelement und/oder das Verriegelungselement von der Unterseite eines Schneckenflügels der Mischschnecke vorstehen. Das Messeraufnahmeelement und/oder das Verriegelungselement können beispielsweise an einen Grundkörper der Montageplatte befestigt sein (angeschweißt, angeschraubt, angenietet, ...) oder integral mit dem Grundkörper der Montageplatte ausgebildet sein. Entsprechend können das Messeraufnahmeelement und/oder das Verriegelungselement integral mit der Mischschnecke ausgebildet sein. Beispielsweise kann das Messeraufnahmeelement und/oder das Verriegelungselement in die Montageplatte eingeprägt sein, und/oder durch Biegen eines Abschnitts des Grundkörpers der Montageplatte geformt werden. Dies gilt entsprechend für die (im Wesentlichen) ebenen Bereiche einer entsprechenden Mischschnecke.

Das Verriegelungselement kann eine Gleitfläche und eine Verriegelungsfläche umfassen. Wird das Messer in Montagerichtung A verschoben, kann das komplementäre Verriegelungselement zunächst über die Gleitfläche des Verriegelungselements gleiten und anschließend, nach passieren der Gleitfläche, verriegeln. Ebenso kann das Verriegelungselement beispielsweise integral mit dem Messeraufnahmeelement ausgebildet sein, insbesondere als Verriegelungsfläche auf dem Messeraufnahmeelement.

Beim Verriegeln kommt vorzugsweise eine Verriegelungsfläche des komplementären Verriegelungselements mit der Verriegelungsfläche des Verriegelungselements in Kontakt um das Verriegelungselement mit dem komplementären Verriegelungselement formschlüssig zu verriegeln.

Das komplementäre Verriegelungselement ist hierzu vorzugsweise als Ausschnitt, Durchbruch oder Rücksprung integral mit dem Messer ausgebildet. Ebenso kann das komplementäre Verriegelungselement an einem Federarm des Messers angeordnet sein, beispielsweise an einem freien Ende eines Federarms. Dieser Federarm kann integral mit dem Messer ausgebildet sein

Das komplementäre Aufnahmeelement des Messers kann beispielsweise durch eine Randkontur des Messers und/oder durch eine Innenkontur des Messers gebildet werden. In einer Ausführungsform ist das komplementäre Aufnahmeelement gegenüberliegend einer Schneide des Messers angeordnet und durch eine Randkontur des Messers geformt. Beispielsweise kann das komplementäre Aufnahmeelement als Rücksprung, insbesondere als U-förmiger Rücksprung, in der Randkontur des Messers gebildet sein. In einer anderen Ausführungsform kann das komplementäre Aufnahmeelement des Messers beispielsweise als eine Innenkontur des Messers, insbesondere als schmaler Teil einer schlüssellochartig-geformten Innenkontur des Messers ausgebildet sein. Die Innenkontur wird beispielsweise durch einen Durchbruch im Messer geformt.

Die Montageplatte und/oder das Messer können aus Metall, insbesondere Borstahl-, Chrom-Vanadium-Stahl oder aus anderem Stahl, gefertigt sein. Die Dicke der Montageplatte liegt beispielsweise zwischen 3 mm und 10 mm, vorzugsweise zwischen 4 und 8 mm am bevorzugtesten im zwischen 5 mm und 6 mm. Die Dicke des Messers liegt beispielsweise zwischen 3 mm und 10 mm, vorzugsweise zwischen 5 und 8 mm.

Der Grundkörper der Montageplatte und/oder das Messer (und/oder das nachstehend beschriebene Versteifungselement) können beispielsweise durch spanende Bearbeitung, Wasserstrahlschneiden oder Laserschneiden hergestellt werden.

Die Messerwechselvorrichtung ermöglicht einen einfachen, sicheren und schnellen Wechselvorgang, da die Fixierung des Messers über das Messeraufnahmeelement und das Verriegelungselement erfolgt. Diese Fixierung ist lösbar (reversibel), sodass der Einbau des Messers bzw. der Wechsel des Messers schnell und einfach, auch unter den beengten Platzverhältnissen in einem Futtermischbehälter, erfolgen kann.

Das Messer kann weiterhin zumindest eine Führungsaufnahme und die Montageplatte zumindest eine Messerführung aufweisen. Die Führungsaufnahme kann so mit der Messerführung zusammenwirken, dass eine Winkellage des Messers relativ zur Montageplatte festgelegt wird, wenn das Messer lösbar an der Montageplatte fixiert ist.

Die zumindest eine Messerführung kann von einer Seite der Montageplatte vorstehen, insbesondere von der Seite, von der auch das Messeraufnahmeelement und/oder das Verriegelungselement vorsteht. Die zumindest eine Messerführung kann in Form eines Bolzens, einer Rippe, eines Stegs und/oder dergleichen ausgebildet sein. Die Messerführung kann an dem Grundkörper der Montageplatte befestigt sein (angeschweißt, angeschraubt, angenietet, ...) oder integral mit dem Grundkörper der Montageplatte ausgebildet sein. Beispielsweise kann die Messerführung in die Montageplatte eingeprägt sein, und/oder durch Biegen eines Abschnitts des Grundkörpers der Montageplatte geformt werden. Ist die Montageplatte integral mit der Mischschnecke ausgebildet, gilt dies entsprechend für die Mischschnecke, bzw. deren zumindest eine Wendel.

Die zumindest eine Führungsaufnahme ist vorzugsweise als Ausschnitt, Durchbruch oder Rücksprung integral in dem Messer ausgebildet. Insbesondere ist die Form der Führungsaufnahme an die Form der Messerführung angepasst. Ist die Messerführung beispielsweise als Bolzen ausgebildet, so kann die Führungsaufnahme in Form einer Bohrung (Sackloch oder Durchgangsbohrung) bereitgestellt sein. Ist die Messerführung als Rippe oder Steg ausgebildet, so kann die Führungsaufnahme in Form eines Langlochs oder einer Nut bereitgestellt sein. Ebenso ist es möglich, dass die zumindest eine Führungsaufnahme durch eine Randkontur des Messers gebildet wird (z.B. durch Rücksprünge). Um die Winkellage des Messers relativ zur Montageplatte festzulegen, kann die Messerführung zumindest teilweise von der Führungsaufnahme aufgenommen werden.

Insbesondere kann die Montageplatte eine Vielzahl (zumindest zwei) von Messerführungen aufweisen. Das Messer kann entsprechend eine Vielzahl von Führungsaufnahmen aufweisen. Um die Winkellage des Messers relativ zur Montageplatte festzulegen kann eine erste Messerführung mit einer ersten Führungsaufnahme zusammenwirken und eine zweite Messerführung mit einer zweiten Führungsaufnahme. Somit wird die Winkelstabilität des fixierten Messers verbessert.

Weiterhin kann das Messer eine Vielzahl von Führungsaufnahmen aufweisen, wobei die Führungsaufnahmen in unterschiedlichen Winkelstellungen auf (bzw. in) dem Messer angeordnet sind. Diese Vielzahl von Führungsaufnahmen können einer Messerführung der Montageplatte zugeordnet sein. Je nachdem, welche der Führungsaufnahmen mit der Messerführung zusammen greift, kann das Messer in einfacher Art und Weise in unterschiedlichen Winkelstellungen auf der Montageplatte bzw. der Wendel fixiert werden. Die unterschiedlichen Winkelstellungen des Messers beeinflussen die Schneidwirkung und den Kraftaufwand, der notwendig ist um die Mischschnecke im Futtermischwagenbehälter zu drehen. So kann die Mischschnecke durch die Änderung der Winkellage des Messers in einfacher Weise an das zu mischende Futter (beispielsweise eine Mischung aus Grassilage, Maissilage, Heu, Kraftfutter und/oder dergleichen) angepasst werden.

Zumindest eine Messerführung der Montageplatte (vorzugsweise alle Messerführungen) kann von der Montageplatte vorstehen und ein Messerrastelement aufweisen, welches das Messer in einer Normalenrichtung Z der Montageplatte sichert, wenn das Messer lösbar an der Montageplatte fixiert ist. Das Messerrastelement kann beispielsweise als Vorsprung ausgebildet sein, der über ein Teil des Messers übersteht, wenn die Messerführung in der Führungsaufnahme angeordnet ist und das Verriegelungselement mit dem komplementären Verriegelungselement verriegelt ist. Der Vorsprung sichert das Messer sodann in der Normalenrichtung Z der Montageplatte.

Weiterhin kann das zumindest eine Messeraufnahmeelement einen Kragen aufweisen, der jedenfalls teilweise über das komplementäre Aufnahmeelement des Messers übersteht, wenn das Messer lösbar an der Montageplatte fixiert ist. Der Kragen sichert das Messer in der Normalenrichtung der Montageplatte. Insbesondere kann das Messeraufnahmeelement ein im Wesentlichen zylindrischer Bolzen sein, der an einem der Montageplatte abgewandten Seite einen Kragen aufweist. Der Kragen kann umlaufend am Messeraufnahmeelement angeordnet sein, oder das Messeraufnahmeelement nur teilweise umschließen. Ebenso kann der Kragen an zumindest einer Stelle unterbrochen sein. Durch den Kragen kann das Messer zusätzlich in der Normalenrichtung der Montageplatte gesichert werden.

Zudem kann das Messer ein Federelement umfassen. Das Federelement weist dann das komplementäre Verriegelungselement auf. Durch die Bereitstellung eines Federelements, welches das komplementäre Verriegelungselement aufweist, wird das Aufschieben des Messers auf die Montageplatte vereinfacht. Denn zum Aufschieben kann das Federelement und mithin das komplementäre Verriegelungselement so ausgelenkt werden, dass es über das Verriegelungselement gleitet, oder ohne mit diesem in Kontakt zu kommen über das Verriegelungselement geschoben werden kann. Nachdem das Verriegelungselement passiert wurde, kann das Federelement in die nicht ausgelenkte Lage zurückkehren und so das komplementäre Verriegelungselement mit dem Verriegelungselement verriegeln.

Das Federelement kann einstückig mit dem Messer ausgebildet sein. Dies kann dadurch erreicht werden, dass eine geeignete Struktur in das Messer eingebracht (z.B. gefräst, Wasserstrahl-geschnitten, Laser-geschnitten, oder dergleichen) wird. Insbesondere kann das Federelement zumindest einen Federarm umfassen, an dessen freien Ende das komplementäre Verriegelungselement angeordnet ist. In einer bevorzugten Ausführungsform umfasst das Federelement zwei Federarme, deren freie Enden mit einem Steg verbunden sind. In diesem Fall kann das komplementäre Verriegelungselement an dem Steg angeordnet sein. Die Bereitstellung von zwei Federarmen sichert das Federelement gegen ein unerwünschtes Verdrehen beim Auslenken. Das Federelement kann beispielsweise dazu eingerichtet sein normal zu einer Messerebene ausgelenkt zu werden, oder beispielsweise dazu eingerichtet sein in der Messerebene (d.h. lateral) ausgelenkt zu werden.

Die Messerschnellwechselvorrichtung umfasst weiterhin ein Versteifungselement. Das Versteifungselement kann lösbar an der Montageplatte und/oder dem Messer fixiert werden, sodass das Messer zwischen der Montageplatte und dem Versteifungselement gehalten wird. Das Versteifungselement stützt das Messer in der Normalenrichtung Z.

Das Bereitstellen eines Versteifungselements ermöglicht es, das Messer dünner zu gestalten, wodurch das Aufschieben und Verriegeln des Messers auf der Montageplatte vereinfacht wird. Durch das Versteifungselement kann eine ausreichende Steifigkeit des Messers im Betrieb, d.h. zum Schneiden und/oder Mischen des Futters, gewährleistet werden.

Das Versteifungselement kann beispielsweise gekröpft ausgeführt und an der Montageplatte und/oder dem Messer angeschraubt werden. Ist die Montageplatte integral mit der Mischschnecke ausgebildet, kann das Versteifungselement unmittelbar an der Mischschnecke bzw. dem entsprechenden Bereich des Schneckenflügels angeschraubt werden. Hierfür kann in der Montageplatte, insbesondere in dem Messeraufnahmeelement, zumindest eine Gewindebohrung vorgesehen sein, die dem Anschrauben des Versteifungselements dient. Weiterhin kann das Messer zumindest eine Gewindebohrung und/oder ein Durchgangsloch aufweisen, dass dem Anschrauben des Versteifungselements dient.

Es versteht sich, dass das Versteifungselement auch auf andere Art an der Montageplatte und/oder dem Messer angebracht werden kann. Beispielsweise können an der Montageplatte und/oder dem Messer ein oder mehrere Bolzen angeordnet sein, die von korrespondierenden Öffnungen in dem Versteifungselement aufgenommen werden können. Diese Bolzen können Gewindebolzen sein, oder Querbohrungen aufweisen, sodass das Versteifungselement mithilfe von Muttern und/oder Sicherungssplinten lösbar fixiert werden kann.

Das Versteifungselement kann zumindest eine Führungsaufnahme aufweisen, die mit der Messerführung der Montageplatte zusammenwirken kann um eine Winkellage des Versteifungselements relativ zur Montageplatte festzulegen. Die zumindest eine Führungsaufnahme des Versteifungselements ist vorzugsweise als Ausschnitt, Durchbruch oder Rücksprung integral in dem Versteifungselement ausgebildet. Insbesondere ist die Form der Führungsaufnahme an die Form der Messerführung angepasst. Ist die Messerführung beispielsweise als Bolzen ausgebildet, so kann die Führungsaufnahme des Versteifungselements in Form einer Bohrung (Sackloch oder Durchgangsbohrung) bereitgestellt sein. Ist die Messerführung als Rippe oder Steg ausgebildet, so kann die Führungsaufnahme des Versteifungselements in Form eines Langlochs oder einer Nut bereitgestellt sein. Um die Winkellage des Versteifungselements relativ zur Montageplatte festzulegen, kann die Messerführung zumindest teilweise von der Führungsaufnahme des Versteifungselements aufgenommen werden.

Weiterhin kann das Versteifungselement eine Vielzahl von Führungsaufnahmen aufweisen, wobei die Führungsaufnahmen in unterschiedlichen Winkelstellungen auf dem (bzw. in dem) Versteifungselement angeordnet sind. Diese Vielzahl von Führungsaufnahmen können einer Messerführung der Montageplatte zugeordnet sein. Je nachdem, welche der Führungsaufnahmen mit der Messerführung zusammen greift, kann die Winkelstellung des Versteifungselements in einfacher Art und Weise an die Winkelstellung des Messers auf der Montageplatte angepasst werden.

Zumindest eine Messerführung der Montageplatte (vorzugsweise alle Messerführungen) kann von der Montageplatte vorstehen und ein Versteifungsrastelement aufweisen, welches das Versteifungselement in einer Normalenrichtung der Montageplatte sichert, wenn das Messer und das Versteifungselement lösbar an der Montageplatte fixiert sind. Beispielsweise kann das Versteifungsrastelement dem Messerrastelement gegenüberliegen. Das Versteifungsrastelement kann beispielsweise als Vorsprung ausgebildet sein, der über ein Teil des Messers übersteht, wenn das Versteifungsrastelement lösbar an der Montageplatte fixiert ist. Der Vorsprung sichert das Versteifungselement sodann in der Normalenrichtung Z der Montageplatte.

Die Montageplatte kann zudem einen Befestigungsbereich, insbesondere einen Schweißrand, umfassen, der dazu dient, die Montageplatte an einer Wendel einer Mischschnecke zu befestigen. Vorzugsweise wird die Montageplatte an einer Wendel der Mischschnecke angeschweißt. Alternativ kann die Montageplatte auch angeschraubt, angenietet oder in anderer Art und Weise befestigt werden. Typischerweise werden an einer Mischschnecke eine Vielzahl von Messern und entsprechend eine Vielzahl von Montageplatten angeordnet.

Gemäß einer weiteren Ausführungsform ist die Montageplatte integral mit einer Mischschnecke, insbesondere mit einem Schneckenflügel der Mischschnecke ausgebildet. Insbesondere kann ein Schneckenflügel einer Mischschnecke einen oder mehrere (im Wesentlichen) ebene Bereiche aufweisen. In diesem (im Wesentlichen) ebenen Bereich bzw. diesen (im Wesentlichen) ebenen Bereichen kann/können die Montageplatte(n) angebracht werden, oder eine entsprechende Montageplatte kann mit diesem Bereich/diesen Bereichen integral ausgebildet sein.

Die Messerschnellwechselvorrichtung kann weiterhin einen Werkzeughebel umfassen, welcher zur Montage des Messers eingesetzt wird. Der Werkzeughebel umfasst zumindest ein Auslenkelement, welches dazu eingerichtet ist, mit einem Spannelement des Federelements des Messers einzugreifen, insbesondere zu hintergreifen, um das Federelement auszulenken. Das Spannelement des Federelements ist vorzugsweise benachbart zum, oder am freien Ende eines Federarms des Federelements angeordnet. Weist das Federelement einen Steg auf, der zu mindestens zwei Federarme verbindet, so kann das Spannelement an dem Steg angeordnet sein. Insbesondere kann das Federelement mehrere Spannelemente aufweisen, die von entsprechenden Auslenkelementen des Werkzeughebels hintergriffen werden können. Beispielsweise können die Spannelemente in seitlicher Verlängerung des Stegs über die Federarme überstehen.

Der Werkzeughebel vereinfacht das Auslenken des Federelements sodass das komplementäre Verriegelungselement in einfacher Art und Weise über das Verriegelungselement geführt werden kann, wenn das Messer in der Montage Richtung A mit dem komplementären Aufnahmeelement auf das Messeraufnahmeelement aufgeschoben wird.

Zudem kann der Werkzeughebel zumindest eine Werkzeughebelführung umfassen, die als Widerlager beim Auslenken des Federelements (normal zur Messerebene, oder in der Messerebene) dient. Die Werkzeughebelführung kann in vorteilhafter Weise in eine korrespondierende Ausnehmung/Rücksprung des Messers eingeführt werden, um ein Abrutschen des Werkzeughebels beim Auslenken des Federelements zu verhindern.

Der Werkzeughebel kann zudem eine Sperrklinke umfassen, die beweglich am Werkzeughebel angeordnet ist. Diese Sperrklinke kann in eine Sperrposition bewegt werden. In der Sperrposition wird das Federelement durch die Sperrklinke in der ausgelenkten Lage fixiert, wenn das Federelement zuvor durch das Auslenkelement des Werkzeughebels ausgelenkt wurde. Somit kann das Messer in einfacher Art und Weise für das aufschieben vorbereitet werden, indem das Federelement zunächst ausgelenkt wird und anschließend in der ausgelenkten Lage fixiert wird. Hierdurch wird das Aufschieben des Messers auf die Montageplatte vereinfacht. Nach erfolgreichem Aufschieben des Messers, kann der Montagehebel bzw. die Sperrklinke gelöst werden, sodass das Federelement in die Ausgangslage zurückgekehrt und das Messer mit der Montageplatte verriegelt wird. Anschließend kann der Werkzeughebel abgenommen werden.

Das Messer, welches für den Einsatz in der zuvor beschriebenen Messerschnellwechselvorrichtung gestaltet ist, umfasst eine Schneide und ist dazu eingerichtet lösbar an der Montageplatte der Messerschnellwechselvorrichtung fixiert zu werden.

Die Montageplatte, welche für den Einsatz in der zuvor beschriebenen Messerschnellwechselvorrichtung gestaltet ist, umfasst einen Befestigungsbereich, insbesondere einen Schweißrand, der dazu dient die Montageplatte an einer Wendel einer Mischschnecke zu befestigen.

Gemäß einer weiteren Ausführungsform ist die Montageplatte integral mit einer Mischschnecke, insbesondere mit einem Schneckenflügel der Mischschnecke ausgebildet. Insbesondere kann ein Schneckenflügel einer Mischschnecke einen oder mehrere (im Wesentlichen) ebene Bereiche aufweisen. In diesem (im Wesentlichen) ebenen Bereich bzw. diesen (im Wesentlichen) ebenen Bereichen kann/können die Montageplatte(n) angebracht werden, oder eine entsprechende Montageplatte kann mit diesem Bereich/diesen Bereichen integral ausgebildet sein.

Weiterhin wird die Aufgabe zumindest teilweise durch eine Mischschnecke für einen Futtermischwagen gelöst wobei die Mischschnecke ein Getriebe umfasst, das mit einem Antrieb zusammen greifen kann um eine Mischschnecke rotierend um eine Achse anzutreiben. Die Mischschnecke weist weiterhin zumindest eine Wendel (Schneckenflügel) auf, die zumindest teilweise radial um diese Achse angeordnet ist. Die Wendel trägt zumindest eine Montageplatte einer zuvor beschriebenen Messerschnellwechselvorrichtung. Insbesondere kann die Wendel zumindest vier Montageplatten, bevorzugt zumindest fünf Montageplatten, besonders bevorzugt zumindest sechs bis zehn Montageplatten tragen. Diese Montageplatten können radial verteilt an der Wendel der Mischschnecke angeordnet sein. Die Montageplatten können an der Wendel angebracht sein, und/oder integral mit dieser ausgebildet sein.

Insbesondere kann eine Wendel (Schneckenflügel) der Mischschnecke einen oder mehrere (im Wesentlichen) ebene Bereiche aufweisen. In diesem (im Wesentlichen) ebenen Bereich bzw. diesen (im Wesentlichen) ebenen Bereichen kann/können die Montageplatte(n) angebracht werden, oder eine entsprechende Montageplatte kann mit diesem Bereich/diesen Bereichen integral ausgebildet sein.

In einer Ausführungsform kann die Mischschnecke zumindest einen gekanteten Schneckenflügel aufweisen. Dieser gekantete Schneckenflügel hat Bereiche unterschiedlicher Steigung. (Im Wesentlichen) ebene Bereiche wechseln sich bei dieser Mischschnecke mit Bereichen höherer Steigung ab. Zwischen einem (im Wesentlichen) ebenen Bereichen und einem Bereich höherer Steigung können steile Bereiche eingefügt sein. Diese steilen Bereiche gleichen die verringerte Steigung der (im Wesentlichen) ebenen Bereiche aus. Zudem wird die Aufgabe zumindest teilweise durch einen Futtermischwagen gelöst. Dieser Futtermischwagen umfasst ein Fahrgestell und einen Futtermischwagenbehälter, wobei der Futtermischwagenbehälter auf dem Fahrgestell angeordnet ist. Der Futtermischwagen umfasst ferner zumindest eine Mischschnecke, die zumindest eine zu beschriebene Messerschnellwechselvorrichtung umfasst. Diese Mischschnecke ist in dem Futtermischwagenbehälter drehbar angeordnet, um Futtermittel mischen zu können. Die (Dreh-)Achse der zumindest einen Mischschnecke ist vorzugsweise vertikal ausgerichtet. Der Futtermischwagen kann ein gezogener Futtermischwagen oder ein selbstfahrender Futtermischwagen sein.

Zudem wird die Aufgabe zumindest teilweise durch ein Verfahren zum lösbaren Fixieren eines Messers an einer Mischschnecke gelöst. Diese Strecke ist vorzugsweise eine Mischschnecke eines Futtermischwagens. Das Verfahren umfasst die folgenden Schritte:
a) Bereitstellen einer Mischschnecke, die zumindest eine Montageplatte umfasst, und zumindest eines Messers, welches für den Einsatz in einer zuvor beschriebenen Messerschnellwechselvorrichtung geeignet ist.
b) Aufschieben des Messers mit dem komplementären Aufnahmeelement in einer Montagerichtung A auf das Messeraufnahmeelement der Montageplatte, bis das komplementäre Aufnahmeelement an dem Messeraufnahmeelement anschlägt.
c) Verriegeln des Verriegelungselements mit dem komplementären Verriegelungselement, um eine Bewegung des Messers entgegen der Montagerichtung A zu blockieren, nachdem das komplementären Aufnahmeelement an das Messeraufnahmeelement anschlägt.

Mit dem Verfahren werden ebenfalls die zuvor beschriebenen Vorteile erreicht.

### Kurzbeschreibung der Figuren

Die beigefügten Figuren zeigen bevorzugte Ausführungsformen der Erfindung. Nachfolgend werden die beigefügten Figuren kurz erläutert. Dabei zeigt
- Fig. 1: eine schematische Explosionszeichnung einer erfindungsgemäßen Messerschnellwechselvorrichtung;
- Fig. 2: eine schematische Darstellung einer Montageplatte;
- Fig. 3: eine schematische Darstellung eines Messers;
- Fig. 4: eine schematische Darstellung eines Versteifungselements;
- Fig. 5: eine schematische Darstellung einer Montageplatte, welche an einer Wendel einer Mischschnecke angebracht ist;
- Fig. 6: die Montageplatte aus Fig. 2, mit verriegeltem Messer;
- Fig. 7: die Montageplatte aus Fig. 2 mit verriegeltem Messer in unterschiedlichen Winkelstellungen;
- Fig. 8: die Montageplatte und das Messer aus den Fig. 2 und 3 mit angebrachtem Versteifungselement;
- Fig. 9: eine schematische Darstellung eines Werkzeughebels;
- Figs. 10A-H: die Messerschnellwechselvorrichtung beim lösbaren Fixieren eines Messers in unterschiedlichen Verfahrensschritten;
- Fig. 11A: eine schematische Darstellung einer weiteren, erfindungsgemäßen Messerschnellwechselvorrichtung;
- Fig. 11B: eine schematische Darstellung der Messerschnellwechselvorrichtung aus Fig. 11A, mit verriegeltem Messer;
- Fig. 12: eine schematische Darstellung einer Mischschnecke,
- Fig. 13: eine schematische Darstellung einer weiteren Mischschnecke, und
- Fig. 14: eine schematische Darstellung eines gezogenen Futtermischwagens.

### Ausführliche Beschreibung der Figuren

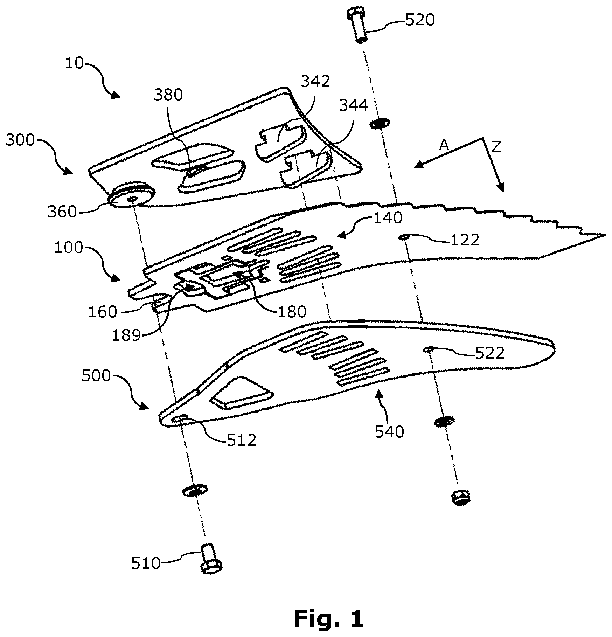

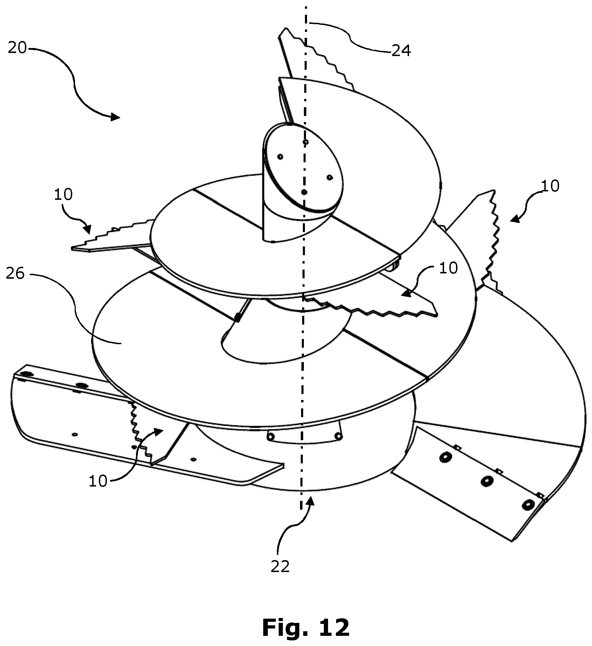

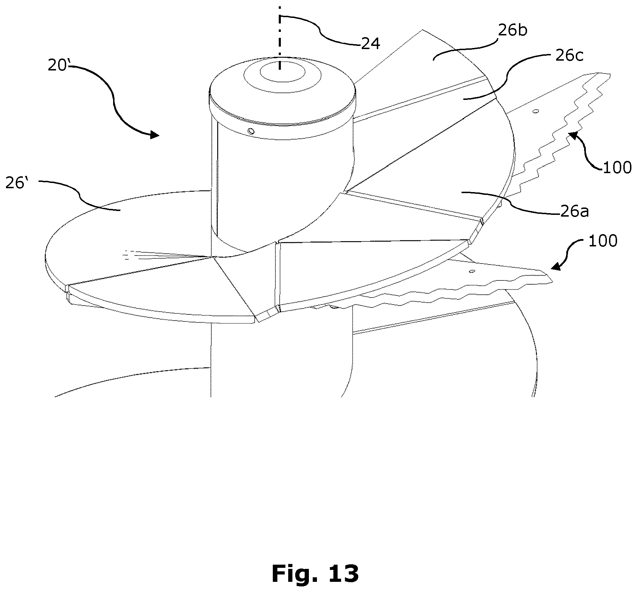

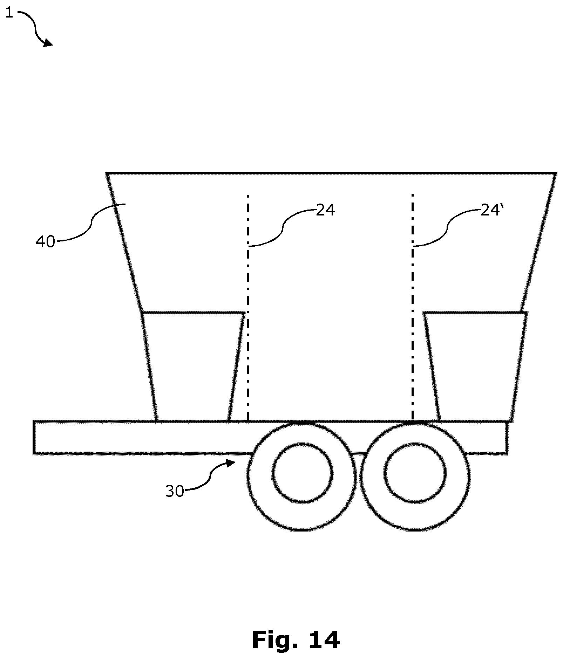

Fig. 1 zeigt eine schematische Explosionszeichnung einer erfindungsgemäßen Messerschnellwechselvorrichtung 10 für eine Mischschnecke 20 (s. Fig. 12 und 13) eines Futtermischwagens 1 (s. Fig. 14). Die Messerschnellwechselvorrichtung 10 umfasst eine Montageplatte 300, ein Messer 100 und ein Versteifungselement 500. Das Messer 100 kann lösbar an der Montageplatte 300 fixiert und durch das angebrachte Versteifungselement 500 in Normalenrichtung Z gestützt werden. Dazu wird das Messer 100 zwischen der Montageplatte 300 und dem Versteifungselement 500 gehalten.

Zur Fixierung des Messers 100 weist die Montageplatte 300 zumindest ein Messeraufnahmeelement 360 und zumindest ein Verriegelungselement 380 auf. Das Messer 100 weist entsprechend zumindest ein komplementäres Aufnahmeelement 160 und zumindest ein komplementäres Verriegelungselement 189 auf. Um das Messer 100 an der Montageplatte 300 zu fixieren, wird das Messer 100 mit dem komplementären Aufnahmeelement 160 in der Montagerichtung A auf das Messeraufnahmeelement 360 aufgeschoben, bis das komplementären Aufnahmeelement 160 an dem Messeraufnahmeelement 360 anschlägt. Die Kontur des komplementären Aufnahmeelements 160 ist vorzugsweise an die Kontur des Messeraufnahmeelements 360 angepasst. In der gezeigten Ausführungsform ist das Messeraufnahmeelement 360 im wesentlichen Bolzen-förmig. Das komplementäre Aufnahmeelement 160 ist als U-förmiger Rücksprung in der Randkontur des Messers 100 ausgebildet und an die Bolzenform des Messeraufnahmeelements 360 angepasst.

Wenn das komplementäre Aufnahmeelement 160 an das Messeraufnahmeelement 360 anschlägt, das Messer 100 also vollständig aufgeschoben ist, kann das Verriegelungselement 380, welches hier als Vorsprung ausgebildet ist, mit dem komplementären Verriegelungselement 189 des Messers 100 verriegeln, sodass eine Bewegung des Messers 100 entgegen der Montagerichtung A blockiert wird. In der gezeigten Ausführungsform ist das komplementäre Verriegelungselement 189 mittig an einem Steg 186 des Federelements 180 angeordnet.

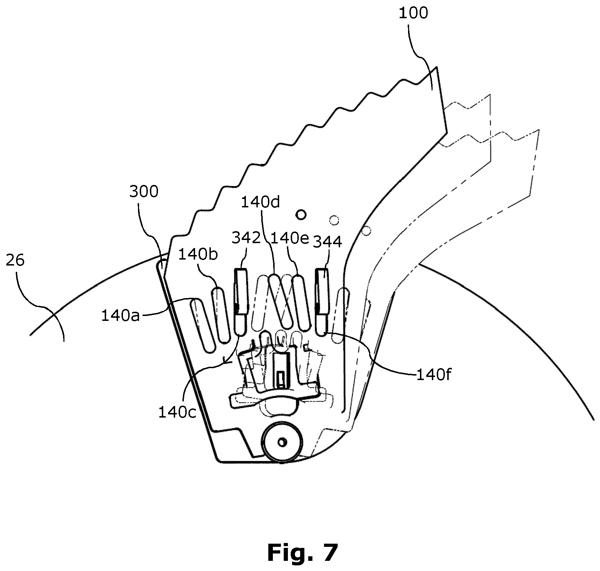

Das gezeigte Messer 100 weist zudem eine Vielzahl von Führungsaufnahmen 140 auf, wobei die Führungsaufnahmen 140 in unterschiedlichen Winkelstellungen auf dem Messer angeordnet sind. Die Führungsaufnahmen 140 sind hier als Langlöcher in dem Messer 100 ausgebildet. Die Montageplatte 300 umfasst zwei Messerführungen 342, 344, die mit den Führungsaufnahmen 140 zusammenwirken können um eine Winkellage des Messers 100 relativ zur Montageplatte 300 festzulegen (s. Fig. 7).

Die Messerführungen 342, 344 stehen von der Montageplatte 300 vor. Beispielsweise sind die Messerführungen 342, 344 an die Montageplatte 300 angeschweißt. Ebenso können die Messerführungen durch Umformen gebildet werden. Dazu kann eine Kontur der Messerführung 342, 344 in die Montageplatte 300 eingebracht werden (z.B. durch Fräsen, Wasserstrahlscheiden, Laserschneiden, oder dergleichen). Anschließend wird das so in der Montageplatte geformte Teil gebogen, sodass die Messerführung(en) von der Montageplatte 300 vorstehen.

Das Versteifungselement 500 weißt entsprechende Führungsaufnahmen 540 auf, welche in der gezeigten Ausführungsform ebenfalls als Langlöcher ausgebildet sind. Diese Führungsaufnahmen 540 können mit den Messerführungen 342, 344 der Montageplatte 300 zusammenzuwirken um eine Winkellage des Versteifungselements 500 relativ zur Montageplatte 300 festzulegen. Das Versteifungselement 500 weist weiterhin Bohrungen 512, 522 auf, durch welche Befestigungselemente (beispielsweise Schrauben 510, 520) geführt werden können um das Versteifungselement 500 an dem Messer 100 und/oder der Montageplatte 300 zu fixieren.

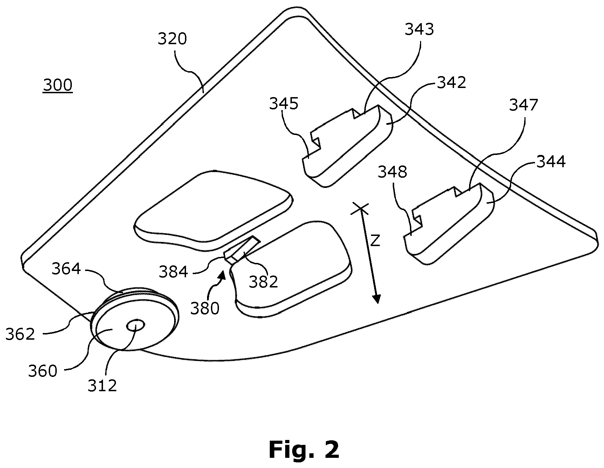

Fig. 2 zeigt die Montageplatte 300 aus Fig. 1 in einer Untersicht. Die Montageplatte 300 weist ein Befestigungsbereich 320 auf, der hier als Schweißrand ausgebildet ist. Mit diesem Schweißrand kann die Montageplatte 300 auf eine Wendel 26 einer Mischschnecke 20 geschweißt werden. Alternativ oder zusätzlich können Schweißpunkte über die Montageplatte 300 verteilt sein, um diese an der Wendel anzubringen. Ebenso ist es möglich, dass die Montageplatte (zusätzlich) verschraubt und/oder vernietet wird. Weiterhin weist die Montageplatte 300 ein Messeraufnahmeelement 360 auf. Auf dieses Messeraufnahmeelement 360 wird das Messer 100 mit dem komplementären Aufnahmeelement 160 aufgeschoben, bis dieses anschlägt.

Das Messeraufnahmeelement 360 ist vorliegend in Form eines zylindrischen Bolzens ausgebildet, der an die Montageplatte 300 angeschweißt, angeschraubt oder anderweitig befestigt ist. An der der Montageplatte 300 abgewandten Seite weist das Messeraufnahmeelement 360 einen Kragen 362 auf. Dieser Kragen 362 ist hier umlaufend ausgebildet, kann aber an einer oder mehreren Stellen unterbrochen sein. Der Kragen 362 bildet einen Hinterschnitt 364 in den das komplementäre Aufnahmeelement 160 des Messers 100 eingreifen kann. Der Kragen 362 sichert das Messer sodann in der Normalenrichtung Z der Montageplatte 300.

In dem Messeraufnahmeelement 360 kann eine Gewindebohrung 312 angeordnet sein, welche dem Anschrauben eines Versteifungselements 500 dient.

Die Montageplatte 300 weist zudem ein Verriegelungselement 380 auf, welches hier als Vorsprung ausgebildet ist. Das Verriegelungselement 380 kann insbesondere in die Montageplatte 300 eingeprägt sein. In anderen Ausführungsformen kann das Verriegelungselement 380 angeschweißt, angeschraubt oder anderweitig angebracht sein. Ebenso ist es möglich, dass das Verriegelungselemente 380 durch Biegen eines Teils der Montageplatte 300 bereitgestellt wird. Das gezeigte Verriegelungselement 380 weist eine Gleitfläche 382 sowie eine Verriegelungsfläche 384 auf. Zum lösbaren Fixieren des Messers 100, gleitet das komplementäre Verriegelungselement 189 über die Gleitfläche 382 bevor es mit der Verriegelungsfläche 384 formschlüssig verriegelt.

Die Montageplatte 300 weist weiterhin eine erste Messerführung 342 und eine zweite Messerführung 344 auf. Die erste und zweite Messerführung 342, 344 stehen jeweils von der Montageplatte vor und können beispielsweise angeschweißt, angeschraubt oder anderweitig befestigt sein. Ebenso können die Messerführungen 342, 344 durch Biegen eines Teils der Montageplatte hergestellt sein. Die erste Messerführung 342 und die zweite Messerführung 344 weisen jeweils ein Messerrastelement 343, 347 auf. Die Messerrastelemente 343, 347 sind jeweils als Vorsprung ausgebildet, der sich im Wesentlichen entgegen der Montagerichtung A erstreckt. Unter diese Vorsprünge kann das Messer 100 in Montagerichtung A eingeschoben werden und so in der Normalenrichtung Z der Montageplatte 300 fixiert werden.

Zudem weisen die erste Messerführung 342 und die zweite Messerführung 344 jeweils ein Versteifungsrastelement 345, 348 auf. Die Versteifungsrastelemente 345, 348 sind jeweils als Vorsprung ausgebildet, der sich im Wesentlichen in Montagerichtung A erstreckt. Unter diese Vorsprünge kann das Versteifungselement 500 entgegen der Montagerichtung A eingeschoben werden und so in der Normalenrichtung Z der Montageplatte 300 fixiert werden.

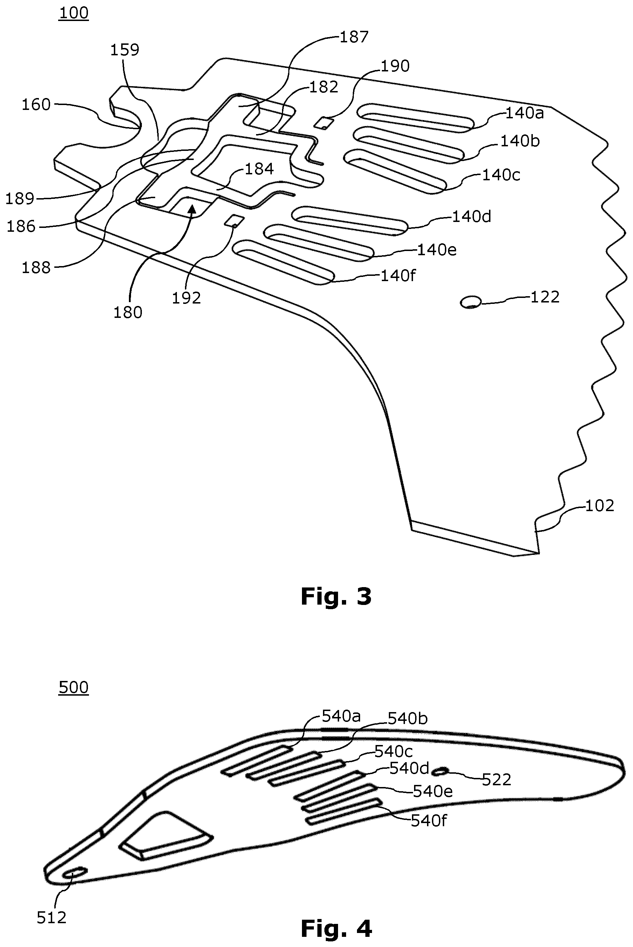

Fig. 3 zeigt das Messer 100 aus Fig. 1 im Detail. An einer ersten Seite weist das Messer 100 eine Schneide 102 auf, die hier als Wellen-Schneide ausgeführt ist. Andere Schneideformen, wie beispielsweise gerade Schneiden oder beidseitig geschliffene Schneiden, sind ebenfalls möglich.

Auf einer der Schneide 102 gegenüberliegenden Seite ist das komplementäre Aufnahmeelement 160 angeordnet. Wie gezeigt ist das komplementäre Aufnahmeelement 160 als U-förmiger Rücksprung in der Kontur des Messers 100 angeordnet.

Das gezeigte Messer 100 weist zudem eine Bohrung 122 auf. Diese Bohrung 122 dient der Befestigung eines Versteifungselements 500 am Messer 100. Das Messer 100 weist zudem in der gezeigten Ausführungsform eine Vielzahl (hier: sechs) von Langlöcher auf, die als Führungsaufnahmen 140a-f für die Messerführungen 342, 344 der Montageplatte dienen.

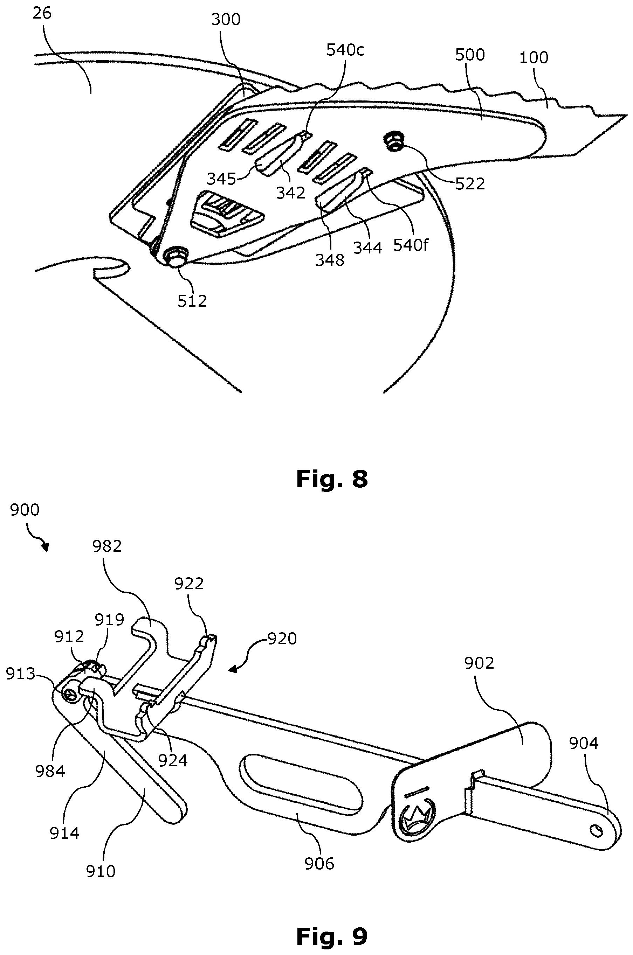

Weiterhin ist ein Federelement 180 integral mit dem Messer 100 ausgebildet. Dieses wurde beispielsweise durch Fräsen, Wasserstrahlscheiden oder Laserschneiden erzeugt. Das Federelement 180 umfasst zwei Federarme 182, 184. Die Federarme weisen eine gewinkelte Form auf und sind an einem ersten Ende (festes Ende) mit dem Messer 100 verbunden. An dem gegenüberliegenden zweiten Ende sind die Federarme 182, 184 über einen Steg 186 miteinander verbunden. Die Federarme 182, 184, bzw. der Steg 186 sind in ihrer Ruhelage gezeigt. Seitlich am Steg 186 sind Spannelemente 187, 188 angeordnet, die von entsprechenden Auslenkelementen 982, 984 eines Werkzeughebels 900 (s. Fig. 9) hintergriffen werden können, um das Federelement 180 aus der Ruhelage in eine vorgespannte Lage auszulenken.

Dieser Werkzeughebel 900 kann mit seinen Werkzeughebelführungen 922, 924 an komplementären Werkzeughebelführungen 190, 192 angesetzt werden. Diese komplementären Werkzeughebelführungen 190, 192 sind als Rücksprünge oder Durchbrüche in dem Messer 100 angeordnet und dienen dem Werkzeughebel 900 als Widerlager. Zudem sichern sie den Werkzeughebel 900 gegen ein unbeabsichtigtes Abrutschen.

Mittig am Steg 186 ist das komplementäre Verriegelungselement 189 angeordnet, welches mit dem Verriegelungselement 380, insbesondere der Verriegelungsfläche 384, verriegeln kann um das Messer 100 in einer Richtung entgegen der Montagerichtung A zu sichern.

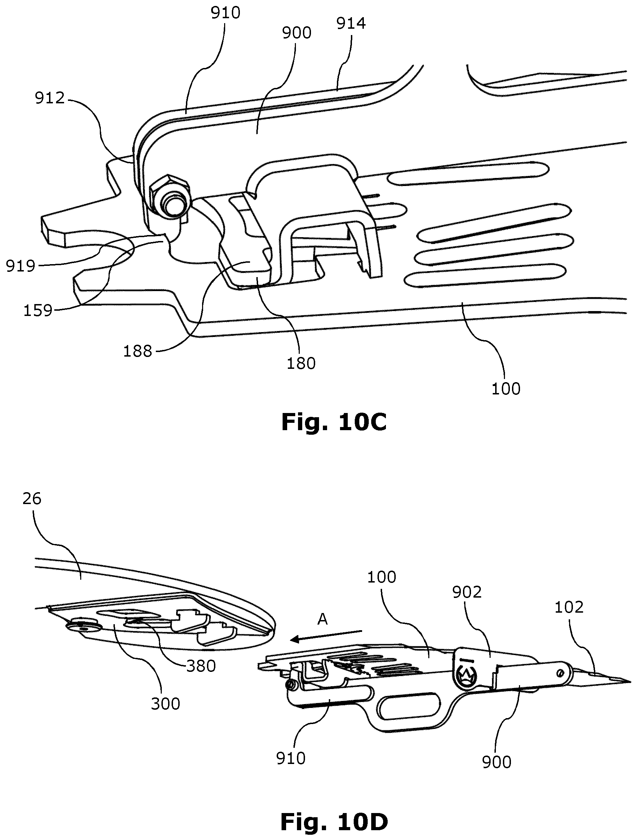

Weiterhin ist an dem Messer 100 eine komplementäre Sperrfläche 159 angeordnet. An dieser kann der Werkzeughebel 900 mit einer Sperrklinge 910 abgestützt werden (s. hierzu Fig. 10C).

Fig. 4 zeigt das Versteifungselement 500 aus Fig. 1 im Detail. Das Versteifungselement 500 weist eine Vielzahl von (hier: sechs) Langlöcher auf, die als Führungsaufnahmen 540a-f für die Messerführungen 342, 344 der Montageplatte dienen. Eine erste Bohrung 512 und eine zweite Bohrung 522 des Versteifungselements 500 dienen der Befestigung des Versteifungselements 500 an dem Messer 100 und/oder der Montageplatte 300, insbesondere mittels Schrauben 510, 520. Die Kontur des Versteifungselements 500 ist im Wesentlichen an die Kontur des Messers 100 angepasst, sodass das Versteifungselement 500 das Messer 100 in der Normalenrichtung Z stützt, wenn das das Messer 100 und das Versteifungselement 500 an der Montageplatte 300 fixiert sind. Die Größe des Versteifungselements 500 ist dabei so an die Größe des Messers angepasst, dass die Schneide 102 des Messers 100 frei bleibt.

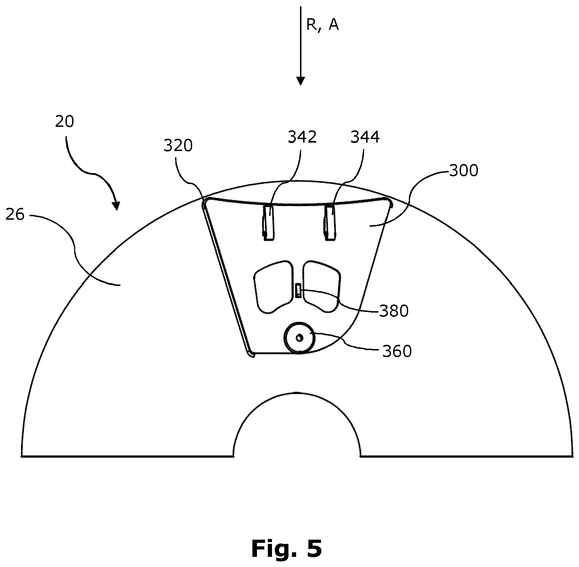

Fig. 5 zeigt eine schematische Darstellung einer Montageplatte 300, welche an einer Wendel 26 (auch als Schneckenflügel bezeichnet) einer Mischschnecke 20 angebracht ist. Die Wendel 26 bzw. die Mischschnecke 20 ist nur ausschnittsweise dargestellt. Die Montageplatte 300 ist an dem Befestigungsbereich 320 (hier ein Schweißbereich) an der Wendel 26 angeschweißt. Alternativ kann die Montageplatte auch angeschraubt, angenietet oder in anderer Weise mit der Wendel 26 verbunden werden. Insbesondere kann die Montageplatte 300 auch integral mit der Wendel 26 ausgebildet sein. Die Montageplatte 300 ist so orientiert, dass das Messeraufnahmeelement 360 in radialer Richtung R (diese entspricht vorliegend der Montagerichtung A) näher am Zentrum der Mischschnecke 20 angeordnet ist, als Messerführungen 342, 344. Das Verriegelungselemente 380 ist zwischen dem Messeraufnahmeelement 360 und den Messerführungen 342, 344 angeordnet.

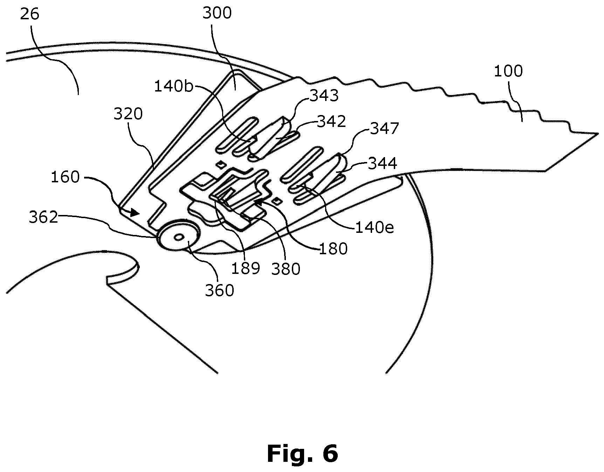

Fig. 6 zeigt die Montageplatte 300 aus Fig. 5, wobei ein Messer 100 lösbar an der Montageplatte 300 fixiert ist. Das komplementäre Aufnahmeelement 160 schlägt in der gezeigten Konfiguration an dem Messeraufnahmeelement 360 an. Somit ist das Messer 100 in Montagerichtung A gesichert. Der Kragen 362 des Messeraufnahmeelement 360 bildet einen Hinterschnitt, in den das komplementäre Aufnahmeelement 160 des Messers 100 eingreift und so in der Normalenrichtung Z gesichert ist. Zudem ist das Verriegelungselement 380 mit komplementären Verriegelungselement, welches an dem Federelement 180 angeordnet ist, verriegelt. Somit ist das Messer auch entgegen der Montagerichtung A gesichert. Die Messerführungen 342, 344 der Montageplatte 300 greifen in die Führungsaufnahmen 140b und 140e entsprechend ein. Hierdurch wird die Winkellage des Messers 100 relativ zur Montageplatte 300 festgelegt. Zudem sind die Messerrastelemente 343, 347 in der gezeigten Ausführungsform jeweils als Vorsprung ausgebildet, der sich im Wesentlichen entgegen der Montagerichtung A erstreckt. Unter diese Vorsprünge ist das Messer 100 eingeschoben und so zusätzlich in der Normalenrichtung Z der Montageplatte 300 fixiert.

Fig. 7 zeigt die Montageplatte 300 mit verriegeltem Messer 100 in unterschiedlichen Winkelstellungen (s. gestrichelte Linien). Um das Messer 100 in unterschiedlichen Winkelstellungen zu fixieren bzw. zu sichern, werden die Messerführungen 342, 344 der Montageplatte 300 in unterschiedliche Führungsaufnahmen 140 eingesteckt bzw. greifen in diese ein. Eine erste Winkelstellung kann erreicht werden, wenn die Messerführungen 342, 344 in die entsprechenden Führungsaufnahmen 140a, 140d eingreifen. Eine zweite Winkelstellung kann erreicht werden, wenn die Messerführungen 342, 344 in die entsprechenden Führungsaufnahmen 140b, 140e eingreifen (wie in Fig. 6, gezeigt) und eine dritte Winkelstellung kann erreicht werden, wenn die Messerführungen 342, 344 in die entsprechenden Führungsaufnahmen 140c, 140f eingreifen, wie in Fig. 7 dargestellt (durchgehende Linien). Durch die Anordnung der Führungsaufnahmen 140 a-f wird die Winkellage der ersten, zweiten und dritten Winkelstellung bestimmt. Beispielsweise können die erste und die zweite Winkelstellung einen Winkel von 5°, 8.5°, 10°; 15° oder 20° einschließen. Ebenso können die zweite und dritte Winkelstellung einen Winkel von 5°, 8.5°, 10°; 15° oder 20° einschließen. Schließen die erste und die zweite Winkelstellung sowie die zweite und dritte Winkelstellung einen Winkel von 8.5° ein, kann das Messer 100 beispielsweise in der ersten Winkellage (0°), in der zweiten Winkellage (8.5°) und in der dritten Winkellage (17°) fixiert bzw. zu gesichert werden.

Fig. 8 zeigt die Montageplatte 300 und das Messer 100 mit angebrachtem Versteifungselement 500. Das Versteifungselement 500 ist in einer dritten Winkelstellung angeordnet, die mit der Winkelstellung des Messers 100 korrespondiert. Entsprechend greifen die Messerführungen 342, 344 der Montageplatte 300 in Führungsaufnahmen 540c, 540f des Versteifungselements 500 ein. Wie gezeigt sind die Versteifungsrastelemente 345, 348 in der dargestellten Ausführungsform jeweils als Vorsprung ausgebildet, der sich im Wesentlichen in Montagerichtung A erstreckt. Unter diese Vorsprünge ist das Versteifungselement 500 eingeschoben und so zusätzlich in der Normalenrichtung Z der Montageplatte 300 fixiert. Weiterhin ist das Versteifungselement mittels der Schrauben 512, 522 an der Montageplatte 300 und/oder dem Messer 100 befestigt.

Fig. 9 ist eine schematische Darstellung eines Werkzeughebels 900. Dieser Werkzeughebel dient der Montage bzw. dem Auswechseln eines Messers 100 der Messerschnellwechselvorrichtung 10. Der Werkzeughebel 900 umfasst einen Tragegriff 906. Dieser dient u.a. zum Tragen und Transportieren des Werkzeughebels 900. Weiterhin umfasst der Werkzeughebel 900 einen Griff 904, mit dem der Werkzeughebel vorzugsweise bedient wird. Um den Mechaniker*in beim Messerwechsel/der Montage des Messers zu schützen, ist am Griff 904 ein Fingerschutz 902 angeordnet, der die Schneide 102 des Messers 100 teilweise abdeckt, wenn der Montagehebel 900 am Messer 100 angesetzt wird.

Der Werkzeughebel 900 dient zum Vorspannen bzw. Auslenken des Federelements 180 des Messers 100. Auf der dem Griff 904 abgewandten Seite ist am Werkzeughebel 900 ein Betätigungselement 920 angeordnet (geschweißt, oder anderweitig verbunden) Ebenso kann das Betätigungselement 920 integral mit dem Werkzeughebel 900 ausgebildet sein. Am Betätigungselement 920 sind zwei Auslenkelemente 982, 984 angeordnet, die dazu eingerichtet sind Spannelemente 187, 188 des Federelements 180 zu hintergreifen um das Federelement 180 aus seiner Ruhelage auszulenken. Zwischen dem Griff 904 und den Auslenkelementen 982, 984 sind eine erste und eine zweite Werkzeughebelführung 922, 924 angeordnet, die als Widerlager beim Auslenken des Federelements 180 dienen. Die Werkzeughebelführungen 922, 924 können in korrespondierende Ausnehmung/Rücksprünge (komplementäre Werkzeughebelführungen 190, 192) des Messers 100 eingeführt werden um ein Abrutschen des Werkzeughebels 900 beim Auslenken des Federelements 180 zu verhindern.

Weiterhin umfasst der Werkzeughebel 900 eine Sperrklinke 910, die beweglich am Werkzeughebel 900 angeordnet ist. Die Sperrklinke 910 umfasst einen ersten Sperrklinkenabschnitt 912 und einen zweiten Sperrklinkenabschnitt 914. Zwischen diesen Abschnitten 912, 914 ist eine Achse 913 angeordnet, um die die Sperrklinke 910 relativ zum Werkzeughebel 900 verschwenkt werden kann. Der erste Sperrklinkenabschnitt 912 umfasst zudem eine Sperrfläche 919, die mit einer komplementäre Sperrfläche 159 des Messers 100 eingreifen kann. Der zweite Sperrklinkenabschnitt 914 dient dazu die Sperrklinke in eine Sperrposition zu bewegen. In der Sperrposition wird das Federelement 180 in der ausgelenkten Lage fixiert, wenn es zuvor durch das/die Auslenkelement(e) 982, 984 des Werkzeughebels 900 ausgelenkt wurde.

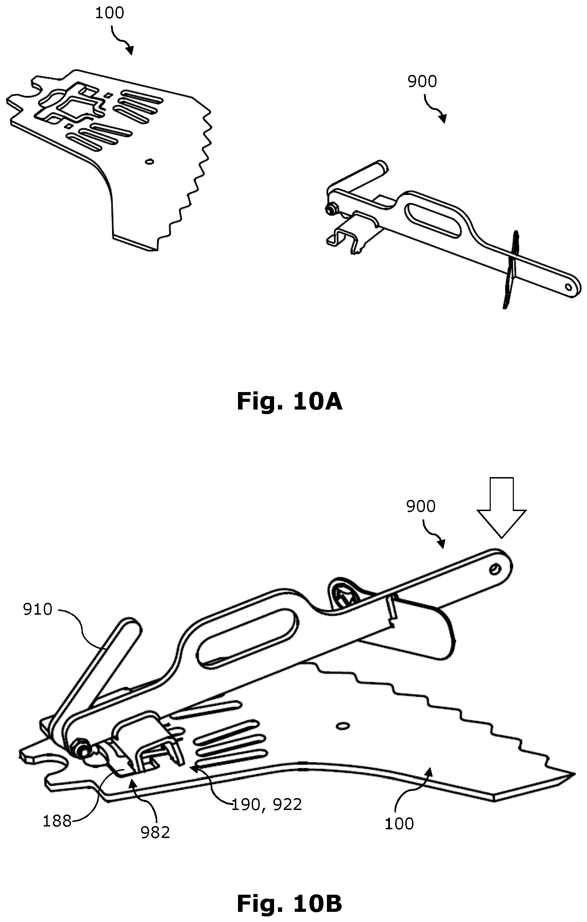

Die Figuren 10A-H zeigen schematisch Verfahrensschritte zum lösbaren Fixieren eines Messers 100 an einer Montageplatte 300. Die in diesen Figuren gezeigten Messer 100, Montageplatten 300, Versteifungselemente 500 und Werkzeughebel 900 entsprechen im Wesentlichen den zuvor beschriebenen Messern, Montageplatten, Versteifungselementen und Werkzeughebeln, sodass auf im Folgenden auf unnötige Wiederholungen verzichtet wird.

In Fig. 10A sind das Messer 100 und der Werkzeughebel 900 dargestellt. In einem ersten Schritt (s. Fig. 10B), wird der Werkzeughebel 900 an dem Messer 100 angesetzt. Die Auslenkelemente 982, 984 hintergreifen die Spannelemente 187, 188 des Federelements 180. Zudem sind die Werkzeughebelführungen 922, 924 in korrespondierende Ausnehmung/Rücksprünge (komplementäre Werkzeughebelführungen 190, 192) des Messers 100 eingeführt um ein Abrutschen des Werkzeughebels 900 beim nachfolgenden Auslenken des Federelements 180 zu verhindern. Die Sperrklinke 910 ist noch in ihrer Ausgangslage. Durch eine Betätigung des Werkzeughebels 900 in Pfeilrichtung kann das Federelement 180 nun in einfacher Weise ausgelenkt werden.

In Fig. 10C ist das Federelement 180 ausgelenkt. Mittels der Auslenkelemente 982, 984, die die Spannelemente 187, 188 des Federelements 180 hintergreifen, wurde das Federelement 180 ausgelenkt. Die Sperrklinke 910 wurde zudem in die Sperrposition gebracht. Die Sperrfläche 919 des ersten Sperrklinkenabschnitts 912 greift an der komplementäre Sperrfläche 159 des Messers 100 an und fixiert so das Federelement 180 in der ausgelenkten Lage.

In dieser ausgelenkten Lage kann das Messer 100 einfach auf die Montageplatte 300 aufgeschoben werden, wie in Fig. 10D gezeigt. Der Fingerschutz 902 des Werkzeughebels 900 deckt die Schneide 102 des Messer jedenfalls teilweise ab, sodass die Verletzungsgefahr reduziert ist.

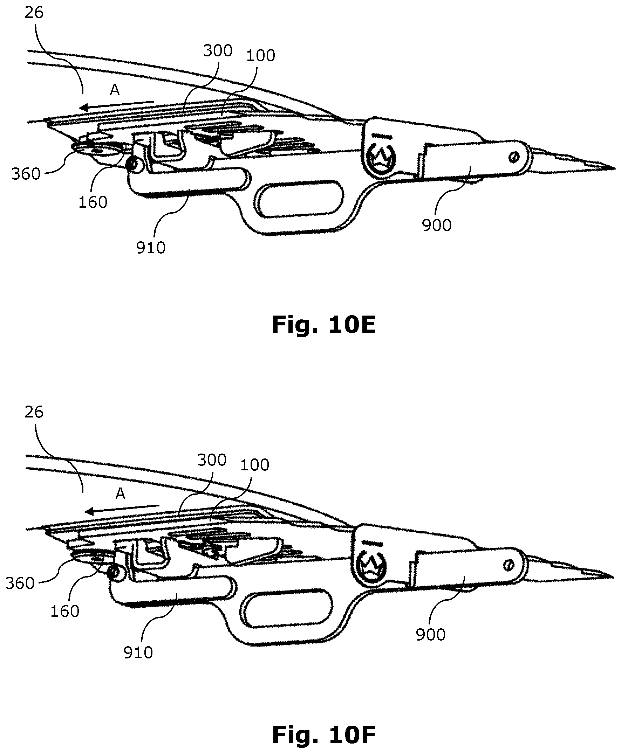

Die Figuren 10E und 10F zeigen das Aufschieben des Messers 100 in Montagerichtung A. Konkret wird das Messer 100 mit dem komplementären Aufnahmeelement 160 in der Montagerichtung A auf das Messeraufnahmeelement 360 der Montageplatte 300 aufgeschoben (s. Fig. 10E) bis das komplementäre Aufnahmeelement 160 an dem Messeraufnahmeelement 360 anschlägt. Mithin ist das Messer in Montagerichtung A fixiert. Während des Aufschiebens ist die Sperrklinke 910 in der Sperrposition, sodass das Federelement 180 ausgelenkt bleibt. Dies vereinfacht das Führen des komplementären Verriegelungselements 189 über das Verriegelungselement 380 der Montageplatte 300.

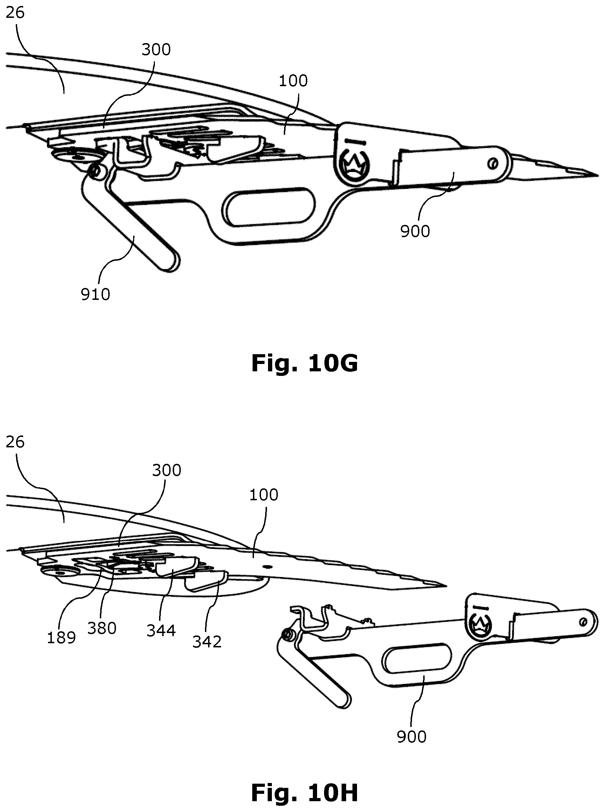

In der in Fig. 10G gezeigten Stellung wird die Sperrklinke 910 aus der Sperrposition hinausbewegt und das Federelement 180 kann in die Ruhelage zurückkehren, sodass das komplementären Verriegelungselement 189 des Messers mit dem Verriegelungselement 380 der Montageplatte 300 verriegelt. Somit ist das Messer 100 in und entgegen der Montagerichtung A fixiert. Die Fixierung in der Normalenrichtung Z erfolgt mittels des Kragens 362 des Messeraufnahmeelements 360 und/oder mittels der Messerrastelemente 343, 347 der Messerführungen 342, 344 wie oben beschrieben. Nun kann der Werkzeughebel 900 abgenommen werden (s. Fig. 10H). Zur Stützung des Messers 100 in Normalenrichtung Z kann im Anschluss noch ein Versteifungselement 500 montiert werden, wie in Fig. 8 gezeigt.

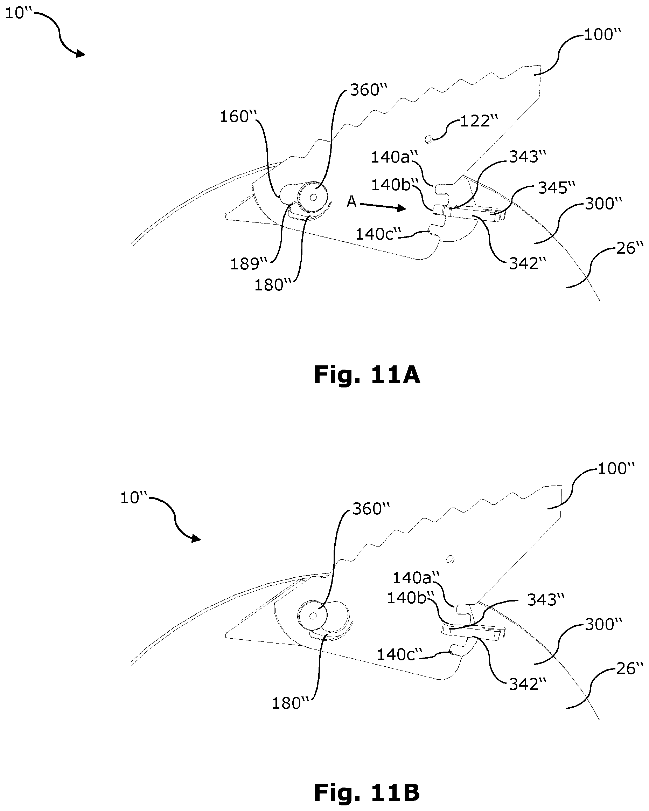

Die Fig. 11A und 11B zeigen eine schematische Darstellung einer weiteren, erfindungsgemäßen Messerschnellwechselvorrichtung 10". In Fig. 11A ist das Messer 100" noch nicht an der Montageplatte 300" fixiert, die hier integral mit der Mischschnecke bzw. einer entsprechenden Wendel 26" ausgebildet ist. In Fig. 11B, wurde das Messer 100" in Montagerichtung A verschoben und schließlich fixiert. Im Gegensatz zu den Fig. 10A bis 10G wird das Messer 100" her nicht radial verschoben, sondern im Wesentlichen in einer Umfangsrichtung der Mischschnecke (d.h. im Wesentlichen tangential, entgegen einer Drehrichtung der Mischschnecke).

Die integralausgeführte Montageplatte 300" weist ein Messeraufnahmeelement 360" auf, welches vorliegend in Form eines zylindrischen Bolzens ausgebildet ist. Dieser kann beispielsweise an der Montageplatte 300" angeschweißt, angeschraubt oder anderweitig befestigt ist. An der der Montageplatte 300" abgewandten Seite weist das Messeraufnahmeelement 360" einen Kragen auf. Dieser Kragen ist, wie auch in der in Fig. 2 gezeigten Ausführungsform umlaufend ausgebildet, kann aber an einer oder mehreren Stellen unterbrochen sein. Der Kragen bildet einen Hinterschnitt in den das komplementäre Aufnahmeelement 160" des Messers 100" eingreifen kann. Der Kragen sichert das Messer sodann in der Normalenrichtung der Montageplatte 300".

Das komplementäre Aufnahmeelement 160" des Messers 100" ist in diesem Beispiel als eine Innenkontur des Messers 100", insbesondere als schmaler Teil einer schlüssellochartig-geformten Innenkontur des Messers ausgebildet. Die Innenkontur wird durch einen entsprechenden Durchbruch im Messer 100" geformt.

Die Montageplatte 300" weist zudem ein Verriegelungselement auf, welches hier integral mit dem Messeraufnahmeelement 360" ausgebildet ist. Insbesondere ist das Verriegelungselement in der gezeigten Ausführungsform eine Verriegelungsfläche auf dem Messeraufnahmeelement, d.h. die Mantelfläche des zylindrischen Bolzens 360".

Die Montageplatte 300" weist weiterhin eine Messerführung 342" auf. Die Messerführung 342" steht von der Montageplatte 300" vor und kann beispielsweise angeschweißt, angeschraubt oder anderweitig befestigt sein. Ebenso kann die Messerführung 342"durch Biegen eines Teils der Montageplatte hergestellt worden sein. Die Messerführung 342" weist ein Messerrastelement 343" auf. Dieses Messerrastelement 343" ist hier als Vorsprung ausgebildet, der sich im Wesentlichen entgegen der Montagerichtung A erstreckt. Unter diesen Vorsprung kann das Messer 100" in Montagerichtung A eingeschoben werden und so in der Normalenrichtung Z der Montageplatte 300" fixiert werden.

Das Messer 100" weist eine Bohrung 122" auf. Diese Bohrung 122" dient der Befestigung eines Versteifungselements 500 am Messer 100". Dies kann wie weiter oben detailliert beschrieben erfolgen. Insbesondere kann an der Messerführung 342" auch ein Versteifungsrastelement 345", beispielsweise in Form eines Vorsprungs vorgesehen sein.

Weiterhin ist ein Federelement 180" integral mit dem Messer 100" ausgebildet. Dieses wurde beispielsweise durch Fräsen, Wasserstrahlscheiden oder Laserschneiden erzeugt. Das Federelement 180" ist hier in Form eines Federarms ausgebildet. Der Federarm ist an seinem ersten Ende (festes Ende) mit dem Messer 100" verbunden. An dem gegenüberliegenden zweiten Ende ist das komplementäre Verriegelungselement 189" angeordnet, welches mit dem Verriegelungselement, insbesondere der Verriegelungsfläche (Mantelfläche des Bolzens), verriegeln kann um das Messer 100" in einer Richtung entgegen der Montagerichtung A zu sichern. In der hier gezeigten Ausführungsform kann das Federelement 180" in der Messerebene (d.h. lateral) ausgelenkt werde, um das Messer 100" auf das Messeraufnahmeelement 360" aufzuschieben. Ist das Messer 100" aufgeschoben, kann das Federelement 180" zurückfedern um das Messer 100" zu verriegeln.

Um das Messer 100"in unterschiedlichen Winkelstellungen zu fixieren bzw. zu sichern, kann die Messerführung 342" der Montageplatte 300" in unterschiedliche Führungsaufnahmen 140a", 140b", 140c" eingesteckt werden Eine erste Winkelstellung kann erreicht werden, wenn die Messerführung 342" in die entsprechende Führungsaufnahme 140a" eingreift. Eine zweite Winkelstellung kann erreicht werden, wenn die Messerführung 342" in die entsprechende Führungsaufnahme 140b" eingreifen (wie in Fig. 11B, gezeigt) und eine dritte Winkelstellung kann erreicht werden, wenn die Messerführung 342" in die entsprechende Führungsaufnahme 140c" eingreift. Durch die Anordnung der Führungsaufnahmen 140a", 140b" und 140c" wird die Winkellage der ersten, zweiten und dritten Winkelstellung bestimmt, wie oben beschrieben.

Fig. 12 ist eine schematische Darstellung einer Mischschnecke 20 für einen Futtermischwagen 1. Die Mischschnecke 20 umfasst ein Getriebe 22, die mit einem Antrieb (nicht gezeigt) zusammengreifen kann, um die Mischschnecke 20 rotierend um eine Achse 24 anzutreiben. Die Mischschnecke umfasst zumindest eine Wendel 26, die zumindest teilweise radial um die Achse 24 angeordnet ist. Die Wendel 26 trägt zumindest eine Montageplatte 300 einer Messerschnellwechselvorrichtung 10. In der gezeigten Ausführungsform sind sechs Messerschnellwechselvorrichtungen 10 vorgesehen, sodass sechs Messer 100 an der Wendel 26 der Mischschnecke 20 angeordnet werden können.

Fig. 13 ist eine ausschnittsweise, schematische Darstellung einer weiteren Mischschnecke 20' für einen Futtermischwagen 1. Die Mischschnecke 20' umfasst ein Getriebe (nicht gezeigt), das mit einem Antrieb (ebenfalls nicht gezeigt) zusammengreifen kann, um die Mischschnecke 20' rotierend um eine Achse 24 anzutreiben. Die Mischschnecke umfasst zumindest eine Wendel 26', die zumindest teilweise radial um die Achse 24 angeordnet ist. Die Wendel 26' ist hier als gekanteter Schneckenflügel ausgeführt. Dieser gekantete Schneckenflügel 26' weist Bereiche unterschiedlicher Steigung 26a, 26b, 26c auf. (Im Wesentlichen) ebene Bereiche 26a wechseln sich bei dieser Mischschnecke 20' mit Bereichen höherer Steigung 20b ab. Zwischen einem (im Wesentlichen) ebenen Bereich 26a und einem Bereich höherer Steigung 26b können steile Bereiche 26c eingefügt sein. Diese steilen Bereiche 26c gleichen die verringerte Steigung der (im Wesentlichen) ebenen Bereiche 26a aus.

In den im Wesentlichen ebenen Bereichen sind teilweise Montageplatten vorgesehen. Hier sind die Montageplatten mit den jeweiligen im Wesentlichen ebenen Bereichen integral ausgebildet. An den integral ausgebildeten Montageplatten bzw. den entsprechenden im Wesentlichen ebenen Bereichen 26a sind jeweils Messer 100 lösbar fixiert.

Fig. 14 ist eine schematische Darstellung eines Futtermischwagens 1. Der gezeigte Futtermischwagen ist ein gezogener Futtermischwagen, der an ein Fahrzeug (nicht gezeigt), beispielsweise einen Traktor, angehängt werden kann. Die Erfindung ist nicht auf gezogene Futtermischwägen beschränkt, sondern betrifft auch angetriebene und (selbst-)fahrende Futtermischwägen. Der Futtermischwagen 1 umfasst ein Fahrgestell 30 und einen Futtermischwagenbehälter 40, wobei der Futtermischwagenbehälter 40 auf dem Fahrgestell 30 angeordnet ist. In dem Futtermischwagenbehälter ist zumindest eine Mischschnecke (hier zwei), umfassend eine Messerschnellwechselvorrichtung, angeordnet. Die zumindest eine Mischschnecke kann um die Achse 24, 24' rotieren, um Futtermittel in dem Futtermischwagenbehälter 40 zu mischen.

### Bezugszeichenliste

- 1: Futtermischwagen
- 10: Messerschnellwechselvorrichtung
- 20: Mischschnecke
- 22: Getriebe
- 24, 24': Achse
- 26, 26': Wendel (Schneckenflügel)
- 26a: (im Wesentlichen) ebener Bereich
- 26b: Bereich höherer Steigung
- 26c: steiler Bereich
- 30: Fahrgestell
- 40: Futtermischwagenbehälter
- 100: Messer
- 102: Schneide
- 122: Bohrung
- 140a-f: Führungsaufnahmen
- 159: Komplementäre Sperrfläche
- 160: Komplementäres Aufnahmeelement
- 180: Federelement
- 182: Federarm
- 184: Federarm
- 186: Steg
- 187: Spannelement
- 188: Spannelement
- 189: Komplementäres Verriegelungselement
- 190: Komplementäre Werkzeughebelführung
- 192: Komplementäre Werkzeughebelführung
- 300: Montageplatte
- 312: Gewindebohrung
- 320: Befestigungsbereich
- 342: erste Messerführung
- 343: Messerrastelement
- 344: zweite Messerführung
- 345: Versteifungsrastelement
- 347: Messerrastelement
- 348: Versteifungsrastelement
- 360: Messeraufnahmeelement
- 362: Kragen
- 364: Hinterschnitt
- 380: Verriegelungselement
- 382: Gleitfläche
- 384: Verriegelungsfläche
- 500: Versteifungselement
- 540a-f: Führungsaufnahmen
- 510: erstes Befestigungselement
- 512: Bohrung
- 520: zweites Befestigungselement
- 522: Bohrung
- 900: Werkzeughebel
- 902: Fingerschutz
- 904: Griff
- 906: Tragegriff
- 910: Sperrklinke
- 912: erster Sperrklinkenabschnitt
- 913: Achse
- 914: zweiter Sperrklinkenabschnitt
- 919: Sperrfläche
- 920: Betätigungselement
- 922: erste Werkzeughebelführung
- 924: zweite Werkzeughebelführung
- 982: erstes Auslenkelement
- 984: zweites Auslenkelement
- A: Montagerichtung
- R: radiale Richtung
- Z: Normalenrichtung

## Patentansprüche

1. Messerschnellwechselvorrichtung (10) für eine Mischschnecke (20) eines Futtermischwagens (1), umfassend
ein Messer (100), eine Montageplatte (300) und ein Versteifungselement (500), wobei das Messer (100) lösbar an der Montageplatte (300) fixiert werden kann; wobei
die Montageplatte (300) zumindest ein Messeraufnahmeelement (360) und zumindest ein Verriegelungselement (380) und das Messer (100) zumindest ein komplementäres Aufnahmeelement (160) und zumindest ein komplementäres Verriegelungselement (189) aufweist,
wobei das Messer (100) und die Montageplatte (300) zum lösbaren Fixieren des Messers (100) an der Montageplatte (300) derart eingerichtet sind, dass
das Messer (100) mit dem komplementären Aufnahmeelement (160) in einer Montagerichtung (A) auf das Messeraufnahmeelement (360) aufgeschoben werden kann, sodass dass komplementären Aufnahmeelement (160) an dem Messeraufnahmeelement (360) anschlägt, und dass
das Verriegelungselement (380) mit dem komplementären Verriegelungselement (189) verriegeln kann, sodass eine Bewegung des Messers entgegen der Montagerichtung (A) blockiert wird, wenn das komplementären Aufnahmeelement (160) an das Messeraufnahmeelement (360) anschlägt, **dadurch gekennzeichnet, dass**
das Versteifungselement (500) lösbar an der Montageplatte (300) und/oder dem Messer (100) fixiert werden kann, sodass das Messer (100) zwischen der Montageplatte (300) und dem Versteifungselement (500) gehalten wird, wobei das Versteifungselement (500) das Messer (100) in der Normalenrichtung Z stützt.

2. Messerschnellwechselvorrichtung (10) nach Anspruch 1, wobei das Messer (100) weiterhin zumindest eine Führungsaufnahme (140a-f) und die Montageplatte (300) zumindest eine Messerführung (342, 344) aufweist, wobei die Führungsaufnahme (140a-f) so mit der Messerführung (342, 344) zusammenwirkt, dass eine Winkellage des Messers (100) relativ zur Montageplatte (300) festgelegt wird, wenn das das Messer (100) lösbar an der Montageplatte (300) fixiert ist.

3. Messerschnellwechselvorrichtung (10) nach Anspruch 2, wobei das Messer (100) eine Vielzahl von Führungsaufnahmen (140a-f) aufweist, wobei die Führungsaufnahmen (140a-f) in unterschiedlichen Winkelstellungen auf dem Messer angeordnet sind.

4. Messerschnellwechselvorrichtung (10) nach einem der Ansprüche 2 oder 3, wobei die zumindest eine Messerführung (342, 344) von der Montageplatte (300) vorsteht und ein Messerrastelement (343, 347) aufweist, welches das Messer (100) in einer Normalenrichtung Z der Montageplatte sichert, wenn das Messer (100) lösbar an der Montageplatte (300) fixiert ist.

5. Messerschnellwechselvorrichtung (10) nach einem der vorhergehenden Ansprüche, wobei das zumindest eine Messeraufnahmeelement (360) einen Kragen (362) aufweist, der jedenfalls teilweise über das komplementäres Aufnahmeelement (160) des Messer übersteht, wenn das Messer (100) lösbar an der Montageplatte (300) fixiert ist, und der das Messer in einer Normalenrichtung Z der Montageplatte sichert.

6. Messerschnellwechselvorrichtung (10) nach einem der vorhergehenden Ansprüche, wobei das Messer (100) ein Federelement (180) umfasst, welches einstückig mit dem Messer (100) ausgebildet sein kann, und wobei das Federelement (180) das komplementäre Verriegelungselement (189) aufweist.

7. Messerschnellwechselvorrichtung (10) nach Anspruch 1, wobei das Versteifungselement (500) zumindest eine Führungsaufnahme (540a-f) aufweist, die mit der Messerführung (342, 344) der Montageplatte (300) zusammenzuwirken kann um eine Winkellage des Versteifungselements (500) relativ zur Montageplatte (300) festzulegen, und wobei die zumindest eine Messerführung (342, 344) optional ein Versteifungsrastelement (345, 348) aufweist, welches das Versteifungselement (500) in einer Normalenrichtung Z der Montageplatte sichert, wenn das Versteifungselement (100) lösbar an der Montageplatte (300) fixiert ist.

8. Messerschnellwechselvorrichtung (10) nach einem der vorhergehenden Ansprüche, wobei
die Montageplatte (300) einen Befestigungsbereich (320), insbesondere einen Schweißrand, umfasst und der dazu dient, die Montageplatte an einer Wendel (26) einer Mischschnecke (20) zu befestigen, oder wobei
die Montageplatte (300) integral mit einer Mischschnecke (20, 20'), insbesondere einer Wendel (26) der Mischschnecke (20, 20'), ausgebildet ist.

9. Messerschnellwechselvorrichtung (10) nach einem der Ansprüche 6 bis 8, weiterhin umfassend einen Werkzeughebel (900), wobei der Werkzeughebel (900) zumindest ein Auslenkelement (982, 984) umfasst, welches dazu eingerichtet ist mit einem Spannelement (187, 188) des Federelements (180) einzugreifen um das Federelement (180) auszulenken, sodass
das komplementäre Verriegelungselement (189) über das Verriegelungselement (380) geführt werden kann, wenn das Messer (100) in der Montagerichtung (A) mit dem komplementären Aufnahmeelement (160) auf das Messeraufnahmeelement (360) aufgeschoben wird.

10. Messerschnellwechselvorrichtung (10) nach dem vorhergehenden Anspruch, wobei der Werkzeughebel (900) eine Sperrklinke (910) umfasst, die beweglich am Werkzeughebel (900) angeordnet ist und in eine Sperrposition bewegt werden kann, wobei in der Sperrposition die Sperrklinke (910) das Federelement (180) in der ausgelenkten Lage fixiert, wenn dieses durch das Auslenkelement (982, 984) des Werkzeughebels (900) ausgelenkt wurde.

11. Mischschnecke (20) für einen Futtermischwagen (1), wobei die Mischschnecke (20)
ein Getriebe (22) umfasst, die mit einem Antrieb zusammengreifen kann, um die Mischschnecke (20) rotierend um eine Achse (24) anzutreiben, und wobei die
Mischschnecke (20) weiterhin zumindest eine Wendel (26) umfasst, die zumindest teilweise radial um die Achse (24) angeordnet ist, wobei
die zumindest eine Wendel (26) zumindest eine Montageplatte (300) einer Messerschnellwechselvorrichtung (10) nach einem der Ansprüche 1 bis 10 trägt, oder wobei
zumindest eine Montageplatte (300) einer Messerschnellwechselvorrichtung (10) nach einem der Ansprüche 1 bis 10 integral mit der zumindest einen Wendel (26) ausgebildet ist.

12. Futtermischwagen (1), umfassend ein Fahrgestell (30) und einen Futtermischwagenbehälter (40), wobei der Futtermischwagenbehälter (40) auf dem Fahrgestell (30) angeordnet ist,
der Futtermischwagen ferner umfassend zumindest eine Mischschnecke (20) nach Anspruch 11, welche in dem Futtermischwagenbehälter (40) angeordnet ist, um Futtermittel zu mischen.

13. Verfahren zum lösbaren Fixieren eines Messers (100) an einer Mischschnecke (20), vorzugsweise einer Mischschnecke (20) eines Futtermischwagens (1), wobei das Verfahren die folgenden Schritte umfasst:
Bereitstellen einer Mischschnecke (20) gemäß Anspruch 11, und zumindest eines Messers (100) einer Messerschnellwechselvorrichtung (10) nach einem der Ansprüche 1 bis 10, wobei das Messer (100) eine Schneide (102) umfasst und dazu eingerichtet ist lösbar an einer Montageplatte (300) der Messerschnellwechselvorrichtung fixiert zu werden;
Aufschieben des Messers (100) mit dem komplementären Aufnahmeelement (160) in einer Montagerichtung (A) auf das Messeraufnahmeelement (360) bis das komplementäre Aufnahmeelement (160) an dem Messeraufnahmeelement (360) anschlägt,
Verriegeln des Verriegelungselements (380) mit dem komplementären Verriegelungselement (189) um eine Bewegung des Messers (100) entgegen der Montagerichtung (A) zu blockieren, nachdem das komplementären Aufnahmeelement (160) an das Messeraufnahmeelement (360) anschlägt.

## Claims

1. Blade quick-change device (10) for a mixing auger (20) of a feed mixer (1), comprising
a blade (100), a mounting plate (300) and a stiffening element (500), wherein the blade (100) can be releasably fixed to the mounting plate (300); wherein
the mounting plate (300) has at least one blade-receiving element (360) and at least one locking element (380) and the blade
(100) has at least one complementary receiving element (160) and at least one complementary locking element (189),
wherein the blade (100) and the mounting plate (300) are arranged for releasably fixing the blade (100) to the mounting plate (300) in such a way that
the blade (100) with the complementary receiving element (160) can be pushed onto the knife-receiving element (360) in an assembly direction (A), so that the complementary receiving element (160) abuts against the knife-receiving element (360), and that
the locking element (380) can lock with the complementary locking element (189) so that a movement of the blade counter to the mounting direction (A) is blocked when the complementary receiving element (160) abuts against the blade-receiving element (360), **characterized in that**
the stiffening element (500) can be releasably fixed to the mounting plate (300) and/or the blade (100) so that the blade (100) is held between the mounting plate (300) and the stiffening element (500), wherein the stiffening element (500) supports the blade (100) in the normal direction Z.

2. Blade quick-change device (10) according to Claim 1, wherein the blade (100) additionally has at least one guide receptacle (140a-f) and the mounting plate (300) has at least one blade guide (342, 344), wherein the guide receptacle (140a-f) cooperates with the blade guide (342, 344) so that an angular position of the blade (100) relative to the mounting plate (300) is determined when the blade (100) is releasably fixed to the mounting plate (300).

3. Blade quick-change device (10) according to Claim 2, wherein the blade (100) has a plurality of guide receptacles (140a-f), wherein the guide receptacles (140a-f) are arranged in different angular positions on the blade.

4. Blade quick-change device (10) according to one of Claims 2 and 3, wherein the at least one blade guide (342, 344) protrudes from the mounting plate (300) and has a blade latching element (343, 347) which secures the blade (100) in a normal direction Z of the mounting plate when the blade (100) is releasably fixed to the mounting plate (300).

5. Blade quick-change device (10) according to one of the preceding claims, wherein the at least one blade-receiving element (360) has a collar (362) which in any case at least partially projects beyond the complementary receiving element (160) of the blade when the blade (100) is releasably fixed to the mounting plate (300), and which secures the blade in a normal direction Z of the mounting plate.

6. Blade quick-change device (10) according to one of the preceding claims, wherein the blade (100) comprises a spring element (180) which can be formed integrally with the blade (100), and wherein the spring element (180) has the complementary locking element (189).

7. Blade quick-change device (10) according to Claim 1, wherein the stiffening element (500) has at least one guide receptacle (540a-f) which can cooperate with the blade guide (342, 344) of the mounting plate (300) in order to determine an angular position of the stiffening element (500) relative to the mounting plate (300), and wherein the at least one blade guide (342, 344) optionally has a stiffening latching element (345, 348) which secures the stiffening element (500) in a normal direction Z of the mounting plate when the stiffening element (100) is releasably fixed to the mounting plate (300).

8. Blade quick-change device (10) according to one of the preceding claims, wherein
the mounting plate (300) comprises a fastening area (320), in particular a welding edge, which serves to fasten the mounting plate to a helix (26) of a mixing auger (20), or wherein
the mounting plate (300) is formed integrally with a mixing auger (20, 20'), in particular a helix (26) of the mixing auger (20, 20').

9. Blade quick-change device (10) according to one of Claims 6 to 8, further comprising a tool lever (900), wherein the tool lever (900) comprises at least one deflection element (982, 984) which is configured to engage with a tensioning element (187, 188) of the spring element (180) in order to deflect the spring element (180) so that
the complementary locking element (189) can be guided over the locking element (380) when the blade (100) is pushed onto the blade-receiving element (360) in the assembly direction (A) with the complementary receiving element (160).

10. Blade quick-change device (10) according to the preceding claim, wherein the tool lever (900) comprises a locking pawl (910) which is movably arranged on the tool lever (900) and can be moved into a locking position, wherein in the locking position the locking pawl (910) fixes the spring element (180) in the deflected position when the latter has been deflected by the deflection element (982, 984) of the tool lever (900).

11. Mixing auger (20) for a feed mixer (1), wherein the mixing auger (20) comprises
a gear (22) which can engage with a drive in order to drive the mixing auger (20) rotating about an axis (24), and wherein
the mixing auger (20) further comprises at least one helix (26) which is arranged at least partially radially about the axis (24), wherein the at least one helix (26) carries at least one mounting plate (300) of a blade quick-change device (10) according to one of Claims 1 to 10, or wherein
at least one mounting plate (300) of a blade quick-change device (10) according to one of Claims 1 to 10 is formed integrally with the at least one helix (26).

12. Feed mixer (1) comprising a chassis (30) and a feed mixer container (40), wherein the feed mixer container (40) is arranged on the chassis (30),
the feed mixer further comprising at least one mixing auger (20) according to Claim 11, which is arranged in the feed mixer container (40) in order to mix feed.

13. Method for releasably fixing a blade (100) to a mixing auger (20), preferably a mixing auger (20) of a feed mixer (1), wherein the method comprises the following steps:
Providing a mixing auger (20) according to Claim 11, and at least one blade (100) of a blade quick-change device (10) according to one of Claims 1 to 10, wherein the blade (100) comprises a cutting edge (102) and is designed to be releasably fixed to a mounting plate (300) of the blade quick-change device;
Sliding the blade (100) with the complementary receiving element (160) in an assembly direction (A) onto the blade-receiving element (360) until the complementary receiving element (160) abuts against the blade-receiving element (360);
Locking the locking element (380) with the complementary locking element (189) in order to block a movement of the blade (100) counter to the mounting direction (A) after the complementary receiving element (160) abuts against the blade-receiving element (360).

## Revendications

1. Dispositif de changement rapide de lame (10) pour une vis de mélange (20) d'une mélangeuse à vis (1), comprenant :
une lame (100), une plaque de montage (300) et un élément de raidissement (500), la lame (100) pouvant être fixée de manière amovible à la plaque de montage (300) ;
ladite plaque de montage (300) présentant au moins un élément récepteur de lame (360) et au moins un élément de verrouillage (380), et la lame (100) présentant au moins un élément récepteur complémentaire (160) et au moins un élément de verrouillage complémentaire (189),
ladite lame (100) et ladite plaque de montage (300) étant conçues pour fixer de manière amovible la lame (100) à la plaque de montage (300) de telle façon que
la lame (100) avec l'élément récepteur complémentaire (160) peut être coulissée sur l'élément récepteur de lame (360) dans une direction de montage (A) de façon que l'élément récepteur complémentaire (160) vienne en butée contre l'élément récepteur de lame (360), et que
l'élément de verrouillage (380) peut se verrouiller avec l'élément de verrouillage complémentaire (189) de façon à bloquer un mouvement de la lame dans le sens contraire de la direction de montage (A) lorsque l'élément récepteur complémentaire (160) vient en butée contre l'élément récepteur de lame (360) ; **caractérisé en ce que**
l'élément de raidissement (500) peut être fixé de manière amovible à la plaque de montage (300) et/ou à la lame (100) de façon que la lame (100) soit maintenue entre la plaque de montage (300) et l'élément de raidissement (500), l'élément de raidissement (500) soutenant la lame (100) dans la direction normale Z.

2. Dispositif de changement rapide de lame (10) selon la revendication 1, dans lequel la lame (100) présente en outre au moins un logement de guidage (140a-f) et la plaque de montage (300) au moins un guide de lame (342, 344), le logement de guidage (140a-f) coopérant avec le guide de lame (342, 344) pour permettre la détermination d'une position angulaire de la lame (100) par rapport à la plaque de montage (300) lorsque la lame (100) est fixée de manière amovible à la plaque de montage (300).

3. Dispositif de changement rapide de lame (10) selon la revendication 2, dans lequel la lame (100) présente une pluralité de logements de guidage (140a-f), les logements de guidage (140a-f) étant disposés selon différentes positions angulaires sur la lame.

4. Dispositif de changement rapide de lame (10) selon l'une des revendications 2 et 3, dans lequel l'au moins un guide de lame (342, 344) fait saillie de la plaque de montage (300) et présente un élément d'enclenchement de lame (343, 347) qui immobilise la lame (100) dans une direction normale Z de la plaque de montage lorsque la lame (100) est fixée de manière amovible à la plaque de montage (300).

5. Dispositif de changement rapide de lame (10) selon l'une quelconque des revendications précédentes, dans lequel l'au moins un élément récepteur de lame (360) présente un collier (362) qui fait saillie au moins partiellement au-delà de l'élément de réception complémentaire (160) de la lame lorsque la lame (100) est fixée de manière amovible à la plaque de montage (300), et qui immobilise la lame dans une direction normale de la plaque de montage.

6. Dispositif de changement rapide de lame (10) selon l'une quelconque des revendications précédentes, dans lequel la lame (100) comprend un élément de ressort (180) qui peut être formé d'un seul tenant avec la lame (100), et dans lequel l'élément de ressort (180) présente l'élément de verrouillage complémentaire (189).

7. Dispositif de changement rapide de lame (10) selon la revendication 1, dans lequel l'élément de raidissement (500) présente au moins un logement de guidage (540a-f) qui peut coopérer avec le guide de lame (342, 344) de la plaque de montage (300) afin de déterminer une position angulaire de l'élément de raidissement (500) par rapport à la plaque de montage (300), et dans lequel l'au moins un guide de lame (342, 344) présente éventuellement un élément d'enclenchement de raidissement (345, 348) qui immobilise l'élément de raidissement (500) dans une direction normale Z de la plaque de montage lorsque l'élément de raidissement (100) est fixé de manière amovible à la plaque de montage (300).

8. Dispositif de changement rapide de lame (10) selon l'une des revendications précédentes,
dans lequel la plaque de montage (300) comprend une zone de fixation (320), notamment un bord de soudure, qui sert à fixer la plaque de montage à une hélice (26) d'une vis de mélange (20), ou
dans lequel la plaque de montage (300) est formée d'une seule pièce avec une vis de mélange (20, 20'), notamment une hélice (26) de la vis de mélange (20, 20').

9. Dispositif de changement rapide de lame (10) selon l'une des revendications 6 à 8, comprenant en outre une manette d'outil (900), ladite manette d'outil (900) comprenant au moins un élément de déviation (982, 984) conçu pour s'emboîter dans un élément de tension (187, 188) de l'élément de ressort (180) afin de dévier l'élément de ressort (180) de façon que l'élément de verrouillage complémentaire (189) puisse être guidé sur l'élément de verrouillage (380) lorsque la lame (100) est coulissée avec l'élément récepteur complémentaire (160) sur l'élément récepteur de lame (360) dans la direction de montage (A).

10. Dispositif de changement rapide de lame (10) selon la revendication précédente, dans lequel la manette d'outil (900) comprend un cliquet de verrouillage (910) disposé mobile sur la manette d'outil (900) et susceptible d'être déplacé dans une position de verrouillage dans laquelle le cliquet de verrouillage (910) fixe l'élément de ressort (180) en position déviée lorsque ce dernier a été dévié par l'élément de déviation (982, 984) de la manette d'outil (900).

11. Vis de mélange (20) de mélangeuse à vis (1),
ladite vis de mélange (20) comprenant une transmission (22) susceptible de s'engrener avec un entraînement pour entraîner la vis de mélange (20) en rotation sur un axe (24), et
ladite vis de mélange (20) comprenant en outre au moins une hélice (26) disposée au moins partiellement radialement autour de l'axe (24) ;
ladite au moins une hélice (26) portant au moins une plaque de montage (300) d'un dispositif de changement rapide de lame (10) selon l'une des revendications 1 à 10,
ou au moins une plaque de montage (300) d'un dispositif de changement rapide de lame (10) selon l'une des revendications 1 à 10 est formée d'une seule pièce avec l'au moins une hélice (26).

12. Mélangeuse à vis (1), comprenant un châssis (30) et une trémie (40), la trémie (40) étant disposée sur le châssis (30),
la mélangeuse à vis comprenant en outre au moins une vis de mélange (20) selon la revendication 11 qui est disposée dans la trémie (40) pour mélanger du fourrage.

13. Procédé de fixation amovible d'une lame (100) sur une vis de mélange (20), de préférence une vis de mélange (20) d'une mélangeuse à vis (1), le procédé comprenant les étapes suivantes :
fourniture d'une vis de mélange (20) selon la revendication 11 et d'au moins une lame (100) d'un dispositif de changement rapide de lame (10) selon l'une des revendications 1 à 10, ladite lame (100) comprenant une arête tranchante (102) et étant conçue pour être fixée de manière amovible à une plaque de montage (300) du dispositif de changement rapide de lame,
coulissement de la lame (100) avec l'élément récepteur complémentaire (160) dans une direction de montage (A) sur l'élément récepteur de lame (360) jusqu'à ce que l'élément récepteur complémentaire (160) vienne en butée contre l'élément récepteur de lame (360),
verrouillage de l'élément de verrouillage (380) avec l'élément de verrouillage complémentaire (189) pour bloquer un mouvement de la lame (100) dans le sens contraire à la direction de montage (A) après que l'élément récepteur complémentaire (160) est venu en butée contre l'élément récepteur de lame (360).
